# EUROPÄISCHE PATENTSCHRIFT

(11) **EP 1 893 787 B1**
(45) Veröffentlichungstag und Bekanntmachung des Hinweises auf die Patenterteilung: **02.09.2009**
(21) Anmeldenummer: 06777316.8
(22) Anmeldetag: 13.06.2006
(51) Int. Cl.: C23C 22/53, C23C 22/56, C08L 33/14, C09D 133/14

(54) **VERFAHREN ZUM PASSIVIEREN VON METALLISCHEN OBERFLÄCHEN MIT ZUBEREITUNGEN VON SÄUREGRUPPENHALTIGEN POLYMEREN UND WACHSEN**
METHOD FOR THE PASSIVATION OF METAL SURFACES WITH COMPOSITIONS COMPRISING POLYMERS WITH ACID GROUPS AND WAXES
PROCEDE POUR PASSIVER DES SURFACES METALLIQUES AVEC DES PREPARATIONS DE POLYMERES PRESENTANT DES GROUPES ACIDES ET DES CIRES

(30) Priorität: 14.06.2005 DE 102005027568
(43) Veröffentlichungstag der Anmeldung: 05.03.2008
(73) Patentinhaber: BASF SE, 67056 Ludwigshafen (DE)
(72) Erfinder: WITTELER, Helmut, 67157 Wachenheim (DE); BERTKAU, Walter, 67069 Ludwigshafen (DE); HEIDENFELDER, Thomas, 67125 Dannstadt-Schauernheim (DE); GÖTHLICH, Alexander, 68163 Mannheim (DE)
(86) Internationale Anmeldenummer: PCT/EP2006/063169
(87) Internationale Veröffentlichungsnummer: WO 2006/134117

(56) Entgegenhaltungen:
- US-A1- 2004 054 044

## Beschreibung

Die vorliegende Erfindung betrifft ein Verfahren zum Passivieren von metallischen Oberflächen durch Behandlung der Oberfläche mit einer sauren, wässrigen Zubereitung welche mindestens ein wasserlösliches, säuregruppenhaltiges Polymer aus (Meth)acrylsäure, ungesättigten Dicarbonsäuren und/oder ungesättigten Phosphor- und/oder Phosphonsäuren sowie optional weiteren Monomeren und mindestens ein Wachs enthält. Sie eignet sich insbesondere zum kontinuierlichen Passivieren von Bandmetallen.

Zur Herstellung von flächigen metallischen Werkstücken wie beispielsweise Automobilteilen, Karosserieteilen, Geräteverkleidungen, Fassadenverkleidungen, Deckenverkleidungen oder Fensterprofilen werden als Rohmaterial heutzutage üblicherweise lange Metallbänder eingesetzt, die durch Heisswalzen und/oder Kaltwalzen von Metallblöcken (sogenannten "Brammen") hergestellt werden und zum Lagern und Transportieren zu Rollen (sogenannten "Coils") aufgewickelt werden.

Die Metallbänder werden zerteilt und mittels geeigneter Techniken wie Stanzen, Bohren, Falzen, Profilieren und/oder Tiefziehen zu den gewünschten Formteilen ausgeformt. Größere Bauteile, wie beispielsweise Automobilkarosserien werden gegebenenfalls durch Verschweißen mehrerer Einzelteile zusammengefügt.

Die Korrosionsschutzbehandlung derartiger metallischer Materialien erfolgt üblicherweise in mehrstufigen Prozessen, und die Oberfläche behandelter Metalle weist mehrere verschiedene Schichten auf. Eine Korrosionsschutzbehandlung kann an verschiedenen Stellen des Herstellprozesses vorgenommen werden. Hierbei kann es sich sowohl um temporären Korrosionsschutz wie um permanenten Korrosionsschutz handeln. Ein temporärer Schutz wird beispielsweise nur zum Lagern oder Transportieren eines Metallbandes oder sonstigen metallischen Werkstückes aufgebracht und vor der endgültigen Verarbeitung wieder entfernt.

Korrosionsschutzschichten, welche auf Metallbänder aufgebracht werden, die anschließend zur Formteilen ausgefügt werden sollen, müssen neben der reinen Korrosionsschutzwirkung auch noch gute mechanische Eigenschaften aufweisen. Insbesondere müssen die Korrosionsschutzschichten eine ausreichende Dehnbarkeit haben, damit sie beim Umformen nicht reißen und somit an diesen Stellen kein ausreichender Korrosionsschutz mehr besteht.

Technisch und wirtschaftlich von besonderer Bedeutung sind Bänder mit einer verzinkten Oberfläche, insbesondere Bänder aus galvanisch verzinktem oder feuerverzinktem Eisen bzw. Stahl. Der Korrosionsschutz des Zinks beruht darauf, dass es unedler ist als der metallische Werkstoff selbst und deshalb zunächst selbst korrodiert. Der metallische Werkstoff an sich bleibt unversehrt, solange er noch durchgehend mit Zink be deckt ist. Weiterhin von Bedeutung sind Metallbänder aus Aluminium bzw. Aluminium-legierungen. In Gegenwart von Luftsauerstoff bildet sich auf der Oberfläche von Zn oder Zn-Legierungen, Al oder Al-Legierungen zunächst eine dünne Oxidschicht, die den korrosiven Angriff auf das darunter liegende Metall je nach den äußeren Bedingungen mehr oder weniger verlangsamt.

Um die schützende Wirkung einer solchen Oxidschicht zu verstärken, werden Al- und Zn-Oberflächen im Regelfalle einer zusätzlichen Passivierungsbehandlung unterzogen. Im Zuge einer derartigen- Behandlung löst sich ein Teil des zu schützenden Metalls auf, und wird gleich darauf wieder in einen oxidischen Film auf der Metalloberfläche eingebaut. Dieser Film ähnelt dem ohnehin vorhandenen Oxidfilm, bietet aber einen stärkeren Schutz. Er wird üblicherweise als Passivierungsschicht bezeichnet. Er verbessert häufig auch die Haftung von auf dem Metall aufgebrachten Lackschichten. Anstelle des Begriffs "Passivierungsschicht" wird daher der Begriff "Konversionsschicht" häufig synonym verwendet, manchmal auch der Begriff "Vorbehandtungsschicht". Eine unmittelbar nach dem Verzinken auf Bandstahl aufgebrachte Passivierungsschicht wird gelegentlich auch als "Nachbehandlungsschicht" bezeichnet. Passivierungsschichten sind vergleichsweise dünn und weisen üblicherweise eine Dicke von nicht mehr als 3 µm auf.

Zur Verstärkung des Korrosionsschutzes werden auf die Passivierungsschicht im Regelfalle zusätzliche (Lack)schichten aufgebracht. Meist handelt es sich um eine Kombination mehrerer Lackschichten, die jeweils unterschiedlichen Zwecken dienen. Sie dienen beispielsweise dazu, die Passivierungsschicht und das Metall vor korrosiven Gasen und/oder Flüssigkeiten aber auch vor mechanischen Beschädigungen, wie beispielsweise Steinschlag zu schützen und natürlich auch ästhetischen Zwecken. Lackschichten sind üblicherweise deutlich dicker als Passivierungsschichten. Typische Dicken reichen von 5 µm bis 400 µm.

Bisher wurden Passivierungsschichten auf Zink- oder Aluminiumoberflächen üblicherweise durch Behandlung des zu schützenden Werkstücks mit wässrigen, sauren Lösungen von CrO₃ erhalten. Der Mechanismus einer derartigen Passivierung ist komplex. Unter anderem wird metallisches Zn oder Al aus der Oberfläche gelöst und fällt in Form von amorphen Zink-Chromoxiden bzw. Aluminium-Chromoxiden wieder aus. Die Schichten können aber auch noch Fremdionen und/oder weitere Komponenten aus der Behandlungslösung enthalten. Insbesondere ist es bei der Behandlung mit Chromsäure nicht zu vermeiden, dass auch ein gewisser Anteil von Cr(VI) in die Passivierungsschicht eingebaut wird.

Um die Behandlung mit Cr(VI)-Lösungen zu vermeiden, ist die Behandlungen mit sauren, wässrigen Cr(III)-Lösungen vorgeschlagen worden. Beispielhaft sei auf US 4,384,902 oder WO/40208 verwiesen. Es gibt jedoch zunehmend Kunden am Markt, die völlig chromfreie Verfahren zum Passivieren wünschen. Zur Vermeidung des Einsatzes von Cr(VI) wie Cr(III) gewinnt daher der Einsatz von Polymeren zunehmend an Bedeutung.

DE-A 195 16 765 offenbart ein chrom- und fluoridfreies Verfahren zur Erzeugung von Konversionsschichten auf metallischen Oberflächen aus Zn oder Al. Die zum Passivieren eingesetzte saure Lösung umfasst ein wasserlösliches Polymeres, Phosphorsäure sowie Al-Chelatkomplexe. Optional können auch Polymere und Co(polymere) von (Meth)acrylsäure eingesetzt werden.

DE-A 197 54 108 offenbart ein chromfreies wässriges Korrosionsschutzmittel, welches Hexafluoro-Anionen von Ti(IV) und/oder Zr(IV), Vanadiumionen, Cobaltionen und Phosphorsäure umfast. Optional können weiterhin noch verschiedene filmbildende Polymere zugegeben werden, darunter auch carboxylgruppenhaltige Copolymere wie Acrylsäure/Maleinsäure-Copolymere.

WO 2004/74372 offenbart ein Verfahren zum Passivieren von Metalloberflächen unter Verwendung von Copolymeren aus 50 bis 99,9 Gew. % (Meth)acrylsäure, 0,1 bis 50 Gew. % sauren Comonomeren, wie beispielsweise ethylenisch ungesättigten Dicarbonsäuren, und/oder polymerisierbaren Phosphor- und oder Phosphonsäuren. Die Verwendung von Wachsen wird allgemein erwähnt, nicht aber die erfindungsgemäße Kombination.

WO 00/55391 offenbart die Verwendung von Vinylphosphonsäure Homo- oder Copolymeren in Kombination mit SiO₂ zur Behandlung metallischer Oberflächen. Die Kombination mit Wachsen ist nicht offenbart.

WO 02/31064 offenbart ein Verfahren zur Beschichtung eines metallischen Bandes mit einer Korrosionsschutzschicht. Hierzu wird eine wässrige Dispersion eingesetzt, die ein wasserlösliches oder wasserdispergiertes Polymer mit einer Säurezahl von 5 bis 200, eine anorganische Verbindung in Partikelform sowie mindestens ein Gleitmittel und/oder mindestens einen Korrosionsinhibitor umfasst. Bei dem Gleitmittel kann es sich um ein Wachs handeln. Die Verwendung von schwach sauren Polymeren mit einer Säurezahl von nur 5 bis 200 gehört nicht zum Umfang der vorliegenden Erfindung.

US 2004/54044 offenbart ein Verfahren zum Beschichten von metallischen Oberflächen mit einer wässrigen, im Wesentlichen chromfreien Zusammensetzung, welche mindestens ein filmbildendes Polymer, Kationen und/oder Hexafluoro- und/oder Tetrafluorokomplexe von Ti, Zr, Hf, Si, Al und B sowie organische Partikel einer Größe von 5 bis 200 nm enthält. Als filmbildende Polymere nennt die Schrift eine Vielzahl unterschiedlicher Polymere, darunter aber keine, welche zwei oder gar 3 verschiedene saure Monomere als Bausteine umfassen.

Aufgabe der Erfindung war es, ein verbessertes Verfahren zur Passivierung metallischer Oberflächen bereitzustellen. Es sollte insbesondere die Weiterverarbeitung des passivierten Metalls erleichtern, beispielsweise beim Umformen. Bevorzugt sollte es sich dabei um ein chromfreies Verfahren handeln, welches zur Behandlung von Bandmetallen sowie aus Bandmetallen herzustellenden Formteilen eingesetzt werden kann.

Dementsprechend wurde ein Verfahren zum Passivieren von metallischen Oberflächen Behandlung der Oberfläche mit einer sauren, wässrigen Zubereitung gefunden, welche mindestens ein wasserlösliches, saure Gruppen umfassendes Polymer X umfasst, wobei
- das Polymer mindestens 0,9 mol Säuregruppen /100 g des Polymers aufweist und es sich hierbei um ein Copolymer X1 handelt, welches aus den folgenden monomeren Einheiten jeweils bezogen auf die Menge aller in das Copolymer einpolymerisierten Monomere aufgebaut ist:
   (A) 40 bis 90 Gew. % (Meth)acrylsäure,
   (B) 5 bis 60 Gew. % mindestens eines weiteren, von (A) verschiedenenmonoethylenisch ungesättigten Monomers, welches eine oder mehrere saure Gruppen aufweist, ausgewählt aus der Gruppe von
      (B1) monoethylenisch ungesättigten Dicarbonsäuren mit 4 bis 7 Kohlenstoffatomen, und/oder
      (B2) monoethylenisch ungesättigten Phosphor- und/oder Phosphonsäuren,
   (C) optional 0 bis 30 Gew. % mindestens eines weiteren -von (A) und (B) verschiedenen- ethylenisch ungesättigten Monomers,
      - der pH-Wert der Zubereitung nicht mehr als 5 beträgt,
      - die Menge des Polymers 1 bis 40 Gew. % bezogen auf die Menge aller Komponenten der Zubereitung beträgt,
      - die Zubereitung weiterhin mindestens ein Wachs umfasst, und
      - die Menge des Wachses 0,001 bis 100 Gew. %, bezogen auf die Gesamtmenge aller Polymere X beträgt.

In einer bevorzugten Ausführungsform der Erfindung beträgt die Menge des Wachses 0,5 bis 20 Gew. %, bezogen auf die Gesamtmenge aller Polymere X.

Überraschenderweise wurde gefunden, dass beschriebene Kombinationen zu einem deutlich verbesserten Korrosionsschutz führen.

Zu der Erfindung ist im Einzelnen das Folgende auszuführen:

Bei den metallischen Oberflächen, die mittels des erfindungsgemäßen Verfahrens passiviert werden können, handelt es sich insbesondere um die Oberflächen unedler Metalle. Es kann sich beispielsweise um die Oberfläche von Eisen, Stahl, Zn, Zn-Legierungen, Al oder Al-Legierungen, Mg- oder Mg-Legierungen handeln. Bei den Stählen kann es sich sowohl um niedrig legierte wie um hochlegierte Stähle handeln.

Das erfindungsgemäße Verfahren eignet sich insbesondere zum Passivieren von metallischen Oberflächen aus Zn, Zn-Legierungen, Al oder Al-Legierungen. Es kann sich dabei um die Oberflächen von vollständig aus den besagten Metallen bzw. Legierungen bestehenden Körpern beziehungsweise Werkstücken handeln. Es kann sich aber auch um die Oberflächen von mit Zn, Zn-Legierungen, Al oder Al-Legierungen beschichteten Körpern handeln, wobei die Körper aus anderen Materialien, beispielsweise aus anderen Metallen, Legierungen, Polymeren oder Verbundwerkstoffen bestehen kann. Insbesondere kann es sich um die Oberfläche von verzinktem Eisen oder Stahl handeln. Der Begriff "verzinkt" umfasst selbstverständlich auch das Beschichten mit einer Zink-Legierung.

Zn- oder Al-Legierungen sind dem Fachmann bekannt. Je nach dem gewünschten Anwendungszweck wählt der Fachmann Art und Menge von Legierungsbestandteilen aus. Typische Bestandteile von Zink-Legierungen umfassen insbesondere Al, Mg, Pb, Si, Mg, Sn, Cu oder Cd. Es kann sich auch um Al/Zn-Legierungen handeln, bei denen Al- und Zn in annähernd gleicher Menge vorhanden sind. Bei den Beschichtungen kann es sich um weitgehend homogene Beschichtungen oder auch um Konzentrationsgradienten aufweisende Beschichtungen handeln. Beispielsweise kann es sich um verzinkten Stahl handeln, der zusätzlich mit Mg bedampft wurde. Hierdurch kann oberflächlich eine Zn/Mg-Legierung entstehen. Typische Bestandteile von Aluminium-Legierungen umfassen insbesondere Mg, Mn, Si, Zn, Cr, Zr, Cu oder Ti.

In einer bevorzugten Ausführungsform des Verfahrens handelt es sich um die Oberfläche eines Bandmetalles, bevorzugt aus Aluminium oder Aluminium-Legierungen oder Eisen bzw. Stahl, insbesondere Bänder aus elektrolytisch verzinktem oder heißverzinktem Stahl.

Weiterhin bevorzugt handelt es sich um die Oberflächen von Formkörpern, welche durch Verarbeitungsvorgänge wie Trennen, Umformen und/oder Fügen aus den genannten Bandmetallen erhältlich sind. Beispiele umfassen Automobilkarosserien oder Teile davon, LKW-Aufbauten, Verkleidungen für Haushaltgeräte wie beispielsweise Waschmaschinen, Geschirrspülmaschinen, Wäschetrockner, Gas- und Elektroherde, Mirkowellengeräte, Tiefkühltruhen oder Kühlschränke, Verkleidungen für technische Geräte oder Einrichtungen wie beispielsweise Maschinen, Schaltschränke, Computergehäuse oder dergleichen, Bauelemente im Architekturbereich wie Wandteile, Fassadenelemente, Deckenelemente, Fenster- oder Türprofile oder Trennwände, Möbel aus metallischen Materialien wie Metallschränke oder Metallregale.

Die zu behandelnden metallischen Oberflächen können selbstverständlich auch dünne oxidische / hydroxidische und/oder carbonatische Oberflächenschichten oder Schichten ähnlichen Aufbaues aufweisen. Derartige Schichten bilden sich auf metallischen Oberflächen im Kontakt mit der Atmosphäre üblicherweise von selbst, und sind im Begriff "metallische Oberfläche" mit eingeschlossen.

Die zum Passivieren eingesetzte Zubereitung umfasst eines oder mehrere wasserlösliche säuregruppenhaltige Polymere X. Bei den eingesetzten Polymeren X handelt es sich um Copolymere. Im Zuge der Behandlung verändert sich die chemische Natur der Metalloberfläche.

Die sauren Gruppen werden bevorzugt aus der Gruppe von Carboxylgruppen, Sulfonsäuregruppen, Phosphor- oder Phosphonsäuregruppen ausgewählt. Besonders bevorzugt handelt es sich um Carboxylgruppen, Phosphor- oder Phosphonsäuregruppen.

Erfindungsgemäß weisen die eingesetzten Polymere X mindestens 0,9 mol Säuregruppen /100 g des Polymers auf. Diese Mengenangabe beziehen sich auf die freien Säuregruppen. Bevorzugt weisen die Polymere mindestens 1 mol / 100 g und besonders bevorzugt mindestens 1,2 mol /100g auf.

Der Begriff wasserlöslich im Sinne dieser Erfindung soll bedeuten, dass das oder die eingesetzten Copolymere homogen wasserlöslich sein sollen. Wässrige Dispersionen von vernetzten Polymerpartikeln an sich wasserunlöslicher Polymerer gehören nicht zum Umfange dieser Erfindung.

Bevorzugt sollten die eingesetzten säuregruppenhaltigen Polymere X lückenlos mit Wasser mischbar sein, auch wenn dies nicht in jedem Falle absolut notwendig ist. Sie müssen aber zumindest in einem solchen Maße wasserlöslich sein, dass die Passivierung mittels des erfindungsgemäßen Verfahrens möglich ist. Im Regelfalle sollten die eingesetzten Copolymere eine Löslichkeit von mindestens 50 g/l, bevorzugt 100 g/l und besonders bevorzugt mindestens 200 g/l aufweisen.

Dem Polymerfachmann ist bekannt, dass die Löslichkeit säuregruppenhaltiger Polymere in Wasser vom pH-Wert abhängig sein kann. Als Bezugspunkt soll daher jeweils der für den jeweiligen Einsatzzweck gewünschte pH-Wert gewählt werden. Ein Polymer, welches bei einem bestimmten pH-Wert eine nicht ausreichende Löslichkeit für den vorgesehenen Einsatzzweck hat, kann bei einem anderen pH-Wert eine ausreichende Löslichkeit aufweisen.

Bei dem Polymer X handelt es sich um eines oder mehrere wasserlösliche Copolymere X1 aus (Meth)acrylsäureeinheiten (A), davon verschiedenen monoethylenisch ungesättigten Monomeren mit sauren Gruppen (B) sowie optional weiteren Monomeren (C) als Baueinheiten.

Die Menge derartiger Monomere (C) sollte aber 30 Gew. % bezüglich der Gesamtmenge aller in das Copolymer einpolymerisierten Monomere nicht überschreiten.

Bei dem Monomer (A) zur Herstellung des Copolymers X1 handelt es sich um (Meth)acrylsäure. Selbstverständlich können auch Gemische von Acrylsäure und Methacrylsäure eingesetzt werden.

Die Menge an (Meth)acrylsäure in dem Copolymer X1 beträgt 40 bis 90 Gew. %, bevorzugt 50 bis 80 Gew. % und besonders bevorzugt 50 bis 70 Gew. %, wobei diese Angabe auf die Summe aller Monomere im Polymer bezogen ist.

Bei dem Monomer (B) handelt es sich um mindestens ein von (A) verschiedenes, aber mit (A) copolymerisierbares, monoethylenisch ungesättigtes Monomer, welches eine oder mehrere saure Gruppen aufweist, und zwar um monoethylenisch ungesättigte Dicarbonsäuren mit 4 bis 7 Kohlenstoffatomen (B1) und/oder um monoethylenisch ungesättigte Phosphor- und/oder Phosphonsäuren (B2). Selbstverständlich können auch mehrere verschiedene Monomere (B) eingesetzt werden.

Die Menge der Monomere (B) im Copolymer X1 beträgt 5 bis 60 Gew. %, bevorzugt 20 bis 50 Gew. %, und besonders bevorzugt 30 bis 50 Gew. %, jeweils bezogen auf die Summe aller Monomere im Polymer.

Beispiele für Monomere (B1) umfassen Maleinsäure, Fumarsäure, Methylfumarsäure, Methylmaleinsäure, Dimethylmaleinsäure, Methylenmalonsäure oder Itaconsäure. Die Monomere können gegebenenfalls auch in Form der entsprechenden cyclischen Anhydride eingesetzt werden. Bevorzugt sind Maleinsäure, Fumarsäure und Itaconsäure, besonders bevorzugt sind Maleinsäure bzw. Maleinsäureanhydrid.

Beispiele für Monomere (B2) umfassen Vinylphosphonsäure, Phosphorsäuremonovinylester, Allylphosphonsäure, Phosphorsäuremonoallylester, 3-Butenylphosphonsäure, Phosphorsäure(mono-3-butenyl)ester, Phosphorsäuremono-(4-vinyloxybutyl)ester, Acrylsäure(phosphonoxyethyl)ester, Methacrylsäure-(phosphonoxyethyl)ester, Phosphorsäure mono-(-2-hydroxy-3-vinyloxy-propyl)ester, Phosphorsäuremono-(1-phosphonoxymethyl-2-vinyloXy-ethyl)-ester, Phosphorsäuremono-(3-allyloxy-2-hydroxy-propyl)ester, Phosphorsäure mono-2-(allylox-1-phosphonoxymethyl-ethyl)ester, 2-Hydroxy-4-vinyloxymethyl-1,3,2-dioxaphosphol, 2-Hydroxy-4-allyloxymethyl-1,3,2-dioxaphosphol. Bevorzugt handelt es sich um Vinylphosphonsäure, Phosphorsäuremonovinylester oder Allylphosphonsäure, besonders bevorzugt ist Vinylphosphonsäure.

Neben den Monomeren (A) und (B) können optional 0 bis 30 Gew. % mindestens eines weiteren, von (A) und (B) verschiedenen ethylenisch ungesättigten Monomers (C) eingesetzt werden. Darüber hinaus werden keine anderen Monomere eingesetzt.

Die Monomere (C) dienen zur Feinsteuerung der Eigenschaften des Copolymers X1. Selbstverständlich können auch mehrere verschiedene Monomere (C) eingesetzt werden. Sie werden vom Fachmann je nach den gewünschten Eigenschaften des Copolymers ausgewählt und weiterhin mit der Maßgabe, dass sie mit den Monomeren (A) und (B) copolymerisierbar sein müssen.

Bevorzugt handelt es sich wie bei (A) und (B) um monoethylenisch ungesättigte Monomere. In besonderen Fällen können aber auch geringe Mengen von Monomeren mit mehreren polymerisierbaren Gruppen eingesetzt werden. Hierdurch kann das Copolymer in geringem Umfange vernetzt werden.

Beispiele geeigneter Monomere (C) umfassen insbesondere Alkylester oder Hydroxyalkylester der (Meth)acrylsäure, wie Methyl(meth)acrylat, Ethyl(meth)acrylat, Butyl(meth)acrylat, 2-Ethylhexyl (meth)acrylat, Hydroxyethyl(meth)acrylat, Hydroxypropyl(meth) acrylat oder Butandiol-1,4-monoacrylat. Weiterhin geeignet sind Vinyl- oder Allylether wie z.B. Methylvinylether, Ethylvinylether, Propylvinylether, 2-Ethylhexylvinylether, Vinylcyclohexylether, Vinyl-4-hydroxybutylether, Decylvinylether, 2-(Diethylamino)ethylvinylether, 2-(Di-n-butyl-amino)ethylvinylether oder Methyldiglykolvinylether bzw. die entsprechenden Allylverbindungen. Ebenfalls eingesetzt werden können Vinylester wie beispielsweise Vinylacetat oder Vinylpropionat. Es können auch basische Comonomere beipielsweise Acrylamid und alkylsubstituierte Acrylamide eingesetzt werden. Es können auch alkoxylierte Monomere, insbesondere ethoxylierte Monomere eingesetzt werden. Insbesondere geeignet sind alkoxylierte Monomere, die sich von der Acrylsäure oder Methacrylsäure ableiten.

Beispiele für vernetzende Monomere umfassen Moleküle mit mehreren ethylenisch ungesättigten Gruppen, beispielsweise Di(meth)acrylate wie Ethylenglykoldi(meth)acrylat oder Butandiol-1,4-di(meth)acrylat oder Poly(meth)acrylate wie Trimethylolpropantri(meth)acrylat oder auch Di(meth)acrylate von Oligo- oder Polyalkylenglykolen wie Di-, Tri- oder Tetraethylenglykoldi(meth)acrylat. Weitere Beispiele umfassen Vinyl(meth)acrylat oder Butandioldivinylether.

Die Menge aller eingesetzten Monomere (C) zusammen beträgt 0 bis 30 Gew. % bezogen auf die Gesamtmenge eingesetzten Monomere. Bevorzugt beträgt die Menge 0 bis 20 Gew. %, besonders bevorzugt 0 bis 10 %. Falls vernetzende wirkende Monomere (C) anwesend sind, sollte deren Menge im Regelfalle 5 %, bevorzugt 2 Gew. % bezogen auf die Gesamtmenge aller für das Verfahren eingesetzten Monomere nicht überschreiten. Sie kann beispielsweise 10 ppm bis 1 Gew. % betragen.

In einer besonders bevorzugten Ausführungsform der Erfindung umfasst das Copolymer X1 neben (A) mindestens ein Monomer (B1) und mindestens ein Monomer (B2). Weiterhin besonders bevorzugt sind neben den Monomeren (A), (B1) und (B2) keine weiteren Monomere (C) vorhanden.

Bevorzugt zur Ausführung der vorliegenden Erfindung sind Copolymere X1 aus Monomeren (A), (B1) und (B2), wobei die Menge (A) 50 bis 90 Gew. %, die Menge von (B1) 5 bis 45 Gew. %, die Menge (B2) 5 bis 45 Gew. % und die Menge von (C) 0 bis 20 Gew. % beträgt. Bei (B1) und (B2) kann es sich jeweils nur um ein Monomer (B1) bzw. (B2) handeln, oder aber auch um jeweils zwei oder mehrere verschiedene Monomere (B1) bzw. (B2).

Besonders bevorzugt beträgt die Menge von (A) 50 bis 80 Gew. %, die Menge von (B1) 12 bis 42 Gew. %, die Menge (B2) 8 bis 38 Gew. % und die Menge von (C) 0 bis 10 Gew. %.

Ganz besonders bevorzugt beträgt die Menge von (A) 50 bis 70 Gew. %, die Menge von (B1) 15 bis 35 Gew. %, die Menge (B2) 15 bis 35 Gew. % und die Menge von (C) 0 bis 5 Gew. %.

Besonders bevorzugt handelt es sich um ein Copolymer X1 aus Acrylsäure, Maleinsäure und Vinylphosphonsäure in den vorstehend genannten Mengen.

Die Komponenten (A), (B) und optional (C) können in prinzipiell bekannter Art und Weise miteinander polymerisiert werden. Entsprechende Polymerisationstechniken sind dem Fachmann bekannt. Bevorzugt werden die Copolymere durch radikalische Polymerisation der genannten Komponenten (A), (B) und optional (C) in wässriger Lösung hergestellt. Daneben können noch geringe Mengen von mit Wasser mischbaren organischen Lösungsmitteln vorhanden sein sowie gegebenenfalls geringe Mengen von Emulgatoren. Einzelheiten zum Durchführen einer radikalischen Polymerisation sind dem Fachmann bekannt.

Zur Herstellung der Copolymere X1 können bei den sauren Monomeren jeweils die freien Säuren eingesetzt werden. Die Herstellung der Polymere kann aber auch erfolgen, indem man im Falle der sauren Monomere zur Polymerisation nicht die freien Säuren einsetzt, sondern in Form von deren Estern, Anhydriden oder anderen hydrolysierbaren Derivaten. Diese können im Zuge oder nach der Polymerisation in wässriger Lösung zu den entsprechenden Säuregruppen hydrolysieren. Insbesondere Maleinsäure oder andere cis-Dicarbonsäuren können vorteilhaft als cyclische Anhydride eingesetzt. Diese hydrolysieren in wässriger Lösung im Regelfalle sehr schnell zu den entsprechenden Dicarbonsäuren. Andere saure Monomere, insbesondere die Monomeren (A) und (B2) werden bevorzugt als freie Säuren eingesetzt.

Die Polymerisation kann weiterhin auch in Gegenwart von mindestens einer Base durchgeführt werden. Hierdurch kann insbesondere der Einbau von Monomeren (B1), wie beispielsweise Maleinsäure in das Polymer verbessert werden, so dass der Anteil nicht einpolymerisierter Dicarbonsäuren niedrig gehalten wird.

Als Basen zum Neutralisieren kommen insbesondere Ammoniak, Amine, Aminoalkohole oder Alkalimetallhydroxide in Betracht. Selbstverständlich können auch Gemische verschiedener Basen eingesetzt werden. Bevorzugte Amine sind Alkylamine mit bis zu 24 C-Atomen sowie Aminoalkohole, die bis zu 24 C-Atome sowie Struktureinheiten des Typs -N-C₂H₄-O- und -N-C₂H₄-OH und -N-C₂H₄-O-CH₃ aufweisen. Beispiele derartiger Aminoalkohole umfassen Ethanolamin, Diethanolamin, Triethanolamin und ihre methylierten Derivate. Die Basen können vor oder während der Polymerisation zugegeben werden. Selbstverständlich ist es auch möglich, ohne Basen zu polymerisieren und optional nach der Polymerisation Base zuzugeben. Hierdurch kann der pH-Wert des Polymers optimal justiert werden.

Der Neutralisationsgrad sollte aber keineswegs zu hoch sein, sondern es sollten noch ausreichend freie Säuregruppen im Polymer vorhanden sein. Durch freie Säuregruppen wird eine besonders gute Haftung der Polymere auf der metallischen Oberfläche erreicht. Im Regelfalle sollten nicht mehr als 40 mol % der im Polymer X bzw. Copolymer X1 vorhanden Säuregruppen neutralisiert sein, bevorzugt 0 bis 30 mol %, besonders bevorzugt 0 bis 20 mol %, ganz besonders bevorzugt 0 bis 12 mol % und beispielsweise 2 bis 10 mol %.

Die radikalische Polymerisation wird bevorzugt durch die Verwendung geeigneter thermisch aktivierbarer Polymerisationsinitiatoren gestartet.

Als Initiatoren können prinzipiell alle unter den Polymerisationsbedingungen in Radikale zerfallende Verbindungen eingesetzt werden. Unter den thermisch aktivierbaren Polymerisationsinitiatoren sind Initiatoren mit einer Zerfallstemperatur im Bereich von 30 bis 150°C, insbesondere von 50 bis 120°C, bevorzugt. Diese Temperaturangabe bezieht sich wie üblich auf 10h-Halbwertszeit.

Der Fachmann trifft unter den prinzipiell geeigneten Initiatoren eine geeignete Auswahl. Die radikalischen Initiatoren sollten im Lösemittel der Reaktion in ausreichendem Maße löslich sein. Wird nur Wasser als Lösemittel eingesetzt, dann sollten die Initiatoren eine ausreichende Wasserlöslichkeit besitzen. Falls in organischen Lösemitteln oder Gemischen von Wasser und organischen Lösemitteln gearbeitet wird, können auch organisch lösliche Initiatoren eingesetzt werden. Bevorzugt werden wasserlösliche Initiatoren eingesetzt.

Beispiele geeigneter Initiatoren umfassen anorganische Peroxoverbindungen, wie Peroxodisulfate, insbesondere Ammonium-, Kalium- und vorzugsweise Natriumperoxodisulfat, Peroxosulfate, Hydroperoxide, Percarbonate und Wasserstoffperoxid und die sogenannten Redoxinitiatoren. In manchen Fällen ist es vorteilhaft, Mischungen verschiedener Initiatoren zu verwenden, beispielsweise Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden.

Weiterhin können auch organische Peroxoverbindungen wie Diacetylperoxid, Di-tert.-butylperoxid, Diamylperoxid, Dioctanoylperoxid, Didecanoylperoxid, Dilauroylperoxid, Dibenzoylperoxid, Bis(o-toloyl)peroxid, Succinylperoxid, tert.-Butylperacetat, tert.-Butylpermaleinat, tert.-Butylperisobutyrat, tert.-Butyl-perpivalat, tert.-Butylperoctoat, tert.-Butylperneodecanoat, tert.-Butylperbenzoat, tert.-Butylperoxid, tert.-Butylhydroperoxid (wasserlöslich), Cumolhydroperoxid, tert.-Butylperoxi-2-ethylhexanoat und Diisopropylperoxidicarbamat eingesetzt werden.

Bevorzugte Initiatoren sind Außerdem Azoverbindungen. Beispiele geeigneter wasserlöslicher Azoverbindungen umfassen 2,2'-Azobis[2-(5-methyl-2-imidazolin-2-yl)propan]dihydrochlorid, 2,2'-Azobis[2-(2-imidazolin-2-yl)propandisulfatedihydrate, 2,2'-Azobis[N-(2-carboxyethyl)-2-methylpropionamidin]tetrahydrat, 2,2'-Azobis{2-[1-(2-hydroxyethyl)-2-imidazolin-2-yl]propan}dihydrochlorid, 2,2'-Azobis{2-methyl-N-[1,1-bis(hydroxymethyl)-2-hydroxyethyl]propionamid, 2,2'-Azobis[2-methyl-N-(2-hydroxyethyl)propionamid], 2,2'-Azobis[2-(2-imidazolin-2-yl)propan] dihydrochloride, 2,2'-Azobis(2-methylpropionamide)dihydrochlorid, 2,2'-Azobis[2-(3,4,5,6-tetrahydropyrimidin- 2-yl)propan] dihydrochloride, 2,2'-Azobis[2-(2-imidazolin-2-yl)propan], 2,2'-Azobis{2-methyl-N-[2-(1-hydroxybuthyl)]propionamid}.

Beispiele von in organischen Lösemitteln löslichen Azoverbindungen umfassen 2,2'-Azobis(4-methoxy-2,4-dimethyl valeronitril), Dimethyl 2,2'-azobis(2-methylpropionat), 1,1'-Azobis(cydohexane-1-carbonitril), 1-[(cyano-1-methylethyl)azo]formamid, 2,2'-Azobis(N-cyclohexyl-2-methylpropionamid), 2,2'-Azobis(2,4-dimethyl valeronitril), 2,2'-Azobis(2-methylbutyronitril), 2,2'-Azobis[N-(2-propenyl)-2-methylpropionamid], 2,2'-Azobis(N-butyl-2-methylpropionamid).

Weiterhin bevorzugte Initiatoren sind Redoxinitiatoren. Redoxinitiatoren enthalten als oxidierende Komponente mindestens eine der oben angegebenen Peroxoverbindungen und als reduzierende Komponente beispielsweise Ascorbinsäure, Glukose, Sorbose, Ammonium- oder Alkalimetallhydrogensulfit, -sulfit, -thiosulfat, -hyposulfit, - pyrosulfit, -sulfid oder Natriumhydroxymethylsulfoxylat. Vorzugsweise verwendet man als reduzierende Komponente des Redoxkatalysators Ascorbinsäure oder Natriumpyrosulfit. Bezogen auf die bei der Polymerisation eingesetzte Menge an Monomeren verwendet man beispielsweise 1 x 10⁻⁵ bis 1 mol-% der reduzierenden Komponente des Redoxkatalysators.

In Kombination mit den Initiatoren bzw. Redoxinitiatorsystemen können zusätzlich Übergangsmetallkatalysatoren eingesetzt werden, z.B. Salze von Eisen, Kobalt, Nickel, Kupfer, Vanadium und Mangan. Geeignete Salze sind z.B. Eisen(II)sulfat, Kobalt(II)-chlorid, Nickel(II)sulfat, Kupfer(I)chlorid. Das reduzierend wirkende Übergangsmetallsalz wird üblicherweise in einer Menge von 0,1 bis 1 000 ppm, bezogen auf die Summe der Monomeren, eingesetzt. Besonders vorteilhaft sind beispielsweise Kombinationen aus Wasserstoffperoxid und Eisen(II)salzen, wie eine Kombination von 0,5 bis 30 Gew.-% Wasserstoffperoxid und 0,1 bis 500 ppm FeSO4 x 7 H2O, jeweils bezogen auf die Summe der Monomeren.

Außerdem können in prinzipiell bekannter Art und Weise auch geeignete Regler, wie beispielsweise Mercaptoethanol eingesetzt werden. Bevorzugt werden keine Regler eingesetzt.

Vorzugsweise werden thermische Initiatoren eingesetzt, wobei wassetlösliche Azoverbindungen und wasserlösliche Peroxoverbindungen bevorzugt sind. Ganz besonders bevorzugt sind Wasserstoffperoxid und Natriumperoxodisulfat oder Mischungen hieraus, ggf. in Verbindung mit 0,1 bis 500 ppm FeSO4 x 7 H2O.

Die Polymerisation kann alternativ aber beispielsweise auch durch geeignete Strahlung ausgelöst werden. Beispiele für geeignete Photoinitiatoren umfassen Acetophenon, Benzoinether, Benzyldialkylketone und deren Derivate.

Selbstverständlich können auch Gemische verschiedener Initiatoren eingesetzt werden, vorausgesetzt sie beeinflussen sich nicht negativ. Die Menge wird vom Fachmann je nach dem gewünschten Copolymer X1 festgelegt. Im Regelfalle werden 0,05 Gew. % bis 30 Gew. %, bevorzugt 0,1 bis 15 Gew. % und besonders bevorzugt 0,2 bis 8 Gew. % des Initiators bezüglich der Gesamtmenge aller Monomere eingesetzt. Außerdem können in prinzipiell bekannter Art und Weise auch geeignete Regler, wie beispielsweise Mercaptoethanol eingesetzt werden. Bevorzugt werden keine Regler eingesetzt.

Die radikalische Polymerisation wird bevorzugt bei einer Temperatur von weniger als 130°C vorgenommen. Abgesehen davon kann die Temperatur vom Fachmann innerhalb weiter Grenzen je nach der Art der eingesetzten Monomere, des Initiators und dem gewünschten Copolymer variiert werden. Bewährt hat sich hierbei eine Mindesttemperatur von etwa 60°C. Die Temperatur kann während der Polymerisation konstant gehalten werden oder es können auch Temperaturprofile gefahren werden. Bevorzugt beträgt die Polymerisationstemperatur 75 bis 125°C, besonders bevorzugt 80 bis 120°C, ganz besonders bevorzugt 90 bis 110°C und beispielsweise 95 bis 105°C.

Die Polymerisation kann in üblichen Apparaturen zur radikalischen Polymerisation vorgenommen werden. Sofern man oberhalb der Siedetemperatur des Wassers bzw. des Gemisches aus Wasser und weiteren Lösemitteln arbeitet, wird in einem geeigneten Druckgefäß gearbeitet, ansonsten kann drucklos gearbeitet werden.

Die synthetisierten Copolymere X1 können aus der wässrigen Lösung mittels üblicher, dem Fachmann bekannter Methoden isoliert werden, beispielsweise durch Eindampfen der Lösung, Sprühtrocknen, Gefriertrocknen oder Fällung. Bevorzugt werden die Copolymere X1 nach der Polymerisation aber überhaupt nicht aus der wässrigen Lösung isoliert, sondern die erhaltenen Lösungen der Copolymere werden als solche für das erfindungsgemäße Verfahren eingesetzt.

Zur Durchführung des erfindungsgemäßen Verfahrens wird eine saure, wässrige Zubereitung Z1 der Polymere X eingesetzt. Hierbei kann es sich selbstverständlich auch um eine Mischung mehrerer, verschiedener Polymere X. Bevorzugt handelt es um Copolymere X1.

Das Molekulargewicht M_{w} (Gewichtsmittel) der für das erfindungsgemäße Verfahren eingesetzten Polymere X wird vom Fachmann je nach der gewünschten Anwendung festgelegt. Eingesetzt werden können beispielsweise Polymere mit einem Molekulargewicht M_{w} von 3000 bis 1 000 000 g/mol. Bewährt haben sich insbesondere Polymere mit 5000 g/mol bis 500 000 g/mol, bevorzugt 10 000 g/mol bis 250 000 g/mol, besonders bevorzugt 15 000 bis 100 000 g/mol und ganz besonders bevorzugt 20 000 bis 75 000 g/mol.

Als Lösemittel umfasst die Zubereitung bevorzugt nur Wasser. Sie kann daneben noch mit Wasser mischbare organische Lösemittel umfassen. Beispiele umfassen Monoalkohole wie Methanol, Ethanol oder Propanol, höhere Alkohole wie Ethylenglykol oder Polyetherpolyole und Etheralkohole wie Butylglykol oder Methoxypropanol. Im Regelfalle beträgt die Menge des Wassers aber mindestens 80 Gew. %, bevorzugt mindestens 90 Gew. % und ganz besonders bevorzugt mindestens 95 Gew. %. Die Angaben beziehen sich jeweils auf die Gesamtmenge aller Lösemittel.

Vorteilhaft können unmittelbar die polymerhaltigen Lösungen eingesetzt werden, die aus der Polymerisation resultieren, welche gegebenenfalls noch weiter verdünnt werden. Um eine solche direkte Weiterverwendung zu erleichtern, sollte die Menge des zur Polymerisation verwendeten wässrigen Lösemittels von Anfang an so bemessen werden, dass die Konzentration des Polymers im Lösemittel für die Anwendung geeignet ist.

Die Konzentration der Polymere X in der Zubereitung Z1 beträgt 1 bis 40 Gew. % bezogen auf die Menge aller Komponenten der Formulierung. Bevorzugt beträgt die Menge 2 bis 35 Gew. % und besonders bevorzugt 5 bis 25 Gew. %. Durch die Konzentration und die Art der eingesetzten Polymere können die Eigenschaften der Zubereitung, beispielsweise deren Viskosität oder deren pH-Wert beeinflusst werden. Die Eigenschaften der Zubereitung können somit optimal auf eine bestimmte Verfahrenstechnik zur Behandlung angepasst werden. So hat sich beispielsweise bei einer Technik mit Abquetschen eine Konzentration von 5 bis 15 Gew. % bewährt, beim Auftrag mittels Lackwalzen eine Konzentration von 15 bis 25 Gew. %. Die angegebenen Konzentrationen beziehen sich auf die einsatzfertige Zubereitung. Es kann auch zunächst ein Konzentrat hergestellt werden, welches erst vor Ort mit Wasser oder optional anderen Lösemittelgemischen auf die gewünschte Konzentration verdünnt wird.

Die erfindungsgemäß eingesetzte Zubereitung Z1 weist einen pH-Wert von nicht mehr als 5 auf, insbesondere einen pH-Wert von 0,5 bis 5, bevorzugt 1,5 bis 3,5. Der pH-Wert der Zubereitung kann beispielsweise durch die Art und Konzentration der erfindungsgemäß verwendeten Polymere gesteuert werden. Naturgemäß spielt hierbei der Neutralisationsgrad des Polymers eine maßgebliche Rolle.

Als weitere Komponente umfasst die Zubereitung mindestens ein in der Formulierung dispergiertes, feinteiliges Wachs. Der Begriff "Wachs" ist dem Fachmann bekannt und beispielsweise in Römpp-Lexikon "Lacke und Druckfarben", Georg Thieme Verlag, Stuttgart, New York 1998, S. 615/616 oder "Ullmann's Encyclpedia of Industrial Chemistry, 6th Edition, Electronic Release; Waxes; 1.2. Definition" definiert. Der Fachmann schließt hierunter auch PTFE-Wachse mit ein, obwohl diese im Sinne der Definition eigentlich keine Wachse sind (siehe z.B. Römpp, a.a.O. Seiten 466/467). Der Begriff "Wachs" umfasst sowohl das eigentliche Wachs wie auch zur Bildung einer Wachsdispersion gegebenenfalls verwendete Hilfsmittel. Dem Fachmann sind Wachse zum Einsatz in wässrigen Dispersionen bekannt, und er trifft eine geeignete Auswahl. Selbstverständlich kann auch eine Mischung verschiedener Wachse eingesetzt werden.

Beispiele geeigneter Wachse zur Ausführung der vorliegenden Erfindung umfassen [CAS-Nummern in eckigen Klammern]:
- Paraffinwachs [8002-74-2]
- Polyethylenwachs [9002-88-4]
- Polyethylen-Polypropylenwachse
- Copolymere Polyethylenwachse, beispielsweise Copolymere des Ethylens mit Acrylsäure, Methacrylsäure, Maleinsäureanhydrid, Vinylacetat, Vinylakohol beispielsweise [38531-18-9], [104912-80-3], [219843-86-4] oder Copolymere des Ethylens mit mehreren dieser Monomere
- Polybutenwachse
- Fischer-Tropsch-Wachse
- oxidierte Wachse, beispielsweise oxidiertes Polyethylenwachs entsprechend [68441-17-8]
- polare modifizierte Polypropylenwachse, beispielsweise [25722-45-6]
- Mikrokristalline Wachse, beispielsweise mikrokristalline Paraffinwachse [63231-60-7]
- Montanwachs und Montanwachsraffinate, beispielsweise [8002-53-7]
- Montansäuren, beispielsweise [68476-03-9]
- Metallsalze von Montansäuren, beispielsweise Natriumsalze [93334-05-5] und Calciumsalze [68308-22-5]
- Ester langkettiger Carbonsäuren mit langkettigen Alkoholen, beispielsweise Stearinsäureoctadecylester [2778-96-3]
- Montansäureester mehrwertiger Alkohole, beispielsweise
   o Montanwachsglyceride [68476-38-0], auch teilverseift
   o Montansäureester des Trimethylolpropans [73138-48-4], auch teilverseift
   o Montansäureester des 1,3-Butandiols [73138-44-0], auch teilverseift
   o Montansäureester des Ethylenglykols [73138-45-1], auch teilverseift
- Montanwachsethoxylate, beispielsweise [68476-04-0]
- Fettsäureamide, besispielsweise Erucamid [112-84-5], Oleamid [301-02-0] und 1,2-Ethylenebis(stearamid) [110-30-5]
- Langkettige Ether, beispielsweise Octadecylphenylether
- Carnaubawachs.

Des Weiteren sind Mischungen von Wachsen geeignet, beispielsweise
- Mischungen aus Stearinsäureoctadecylester und teilverseiften Montansäureestern mehrwertiger Alkohole
- Mischungen aus Paraffinwachsen und teilverseiften Montansäureestern mehrwertiger Alkohole und/oder Montansäuren
- Mischungen aus Polyethylenwachs und Polyethylenglykol.

Die Wachse können auch Säurefunktionen aufweisen, insbesondere Carbonsäuregruppen, die neutralisiert oder unneutralisiert vorliegen können. Wachse mit einer Säurezahl < 200 mg KOH / g sind bevorzugt. Besonders bevorzugt ist eine Säurezahl von 3 bis 80 mg KOH / g.

Weiterhin sind Wachse bevorzugt, die einen Schmelzpunkt aufweisen. In der Regel beträgt der Schmelzpunkt 40 bis 200°C, bevorzugt 60 bis 170°C, besonders bevorzugt 100 bis 160°C. Besonders bevorzugt sind Wachse mit einem Schmelzpunkt von 120 bis 135°C und von 145 bis 160°C.

Bevorzugte Wachse sind oligo- oder polymere Substanzen, die ein Molekulargewicht Mₙ größer 200 g/mol, bevorzugt größer als 400 g/mol aufweisen und die einen Gewichtsanteil von mehr als 60 Gew. % an Strukturelementen ausgewählt aus der Gruppe von
- (-CH₂-CH₂-)
- (-CH₂-CH<)
- (-CH₂-CH(CH₃)-)
- (-CH₃)
- (-CR₂-CR₂-) und (-CR₂-CR(CR₃)-)
aufweisen, wobei R für H und/oder F steht, und mit der Maßgabe, dass die genannten Strukturelemente so miteinander verbunden sind, dass sie überwiegend Einheiten von wenigstens 12 direkt miteinander verknüpften Kohlenstoffatomen umfassen.

Bei Wachsen mit derartigen Struktureinheiten kann es sich insbesondere um Polyethylen- und/oder Polypropylenwachse bzw. Derivate davon handeln. Derartige Wachse weisen im Allgemeinen ein mittleres Molekulargewicht Mₙ von 400 bis 30000 g/mol, bevorzugt 1000 bis 25000 g/mol und besonders bevorzugt 1500 bis 20000 g/mol auf. Die Wachse enthalten neben den Hauptmonomeren Ethylen- bzw. Propylen ggf. weitere Comonomere als Nebenbestandteile auf. Bei weiteren Comonomeren kann es sich beispielsweise um andere α-Olefine, Vinylacetat oder um Monomere mit sauren Gruppen handeln. Beispiele für Monomere mit sauren Gruppen umfassen Acrylsäure, Methacrylsäure, Vinylphosphonsäure, Maleinsäure bzw. Maleinsäureanhydrid oder Vinylessigsäure. Bevorzugt handelt es sich bei sauren Monomeren um Acrylsäure und/oder Methacrylsäure. Geeignet sind beispielsweise Ethylen-(Meth)acrylsäure-Wachse mit einem Ethylen-Gehalt von 75 bis 99 Gew. %, 1 bis 25 Gew. % (Meth)acrylsäure sowie optional 0 bis 10 Gew. % weiteren Monomeren. Hierbei kann es sich insbesondere um Vinylphosphonsäure und/oder Vinylphosphonsäureester handeln.

Beispiele für Derivate von Wachsen umfassen oxidierte Polyolefinwachse, insbesondere oxidierte Polyethylenwachse. Oxidierte Polyethylenwachse weisen verschiedene sauerstoffhaltige Gruppen am Polyethylengerüst auf, wie beispielsweise OH-Gruppen, Ketogruppen und insbesondere COOH-Gruppen.

Die Herstellung von (oxidierten) Polyolefinwachsen ist dem Fachmann prinzipiell bekannt. Einzelheiten können beispielsweise "Ullmann's Encyclpedia of Industrial Chemistry, 6th Edition, Electronic Release; Waxes entnommen werden.

Besonders bevorzugte Wachse sind solche, die sich aufgrund ihres Anlieferungszustands besonders einfach in die Formulierung für das erfindungsgemäße Verfahren einarbeiten lassen, wie beispielsweise mikronisierte Wachse und/oder Wachsdispersionen.

Mikronisierte Wachse sind besonders feinteilige Pulver mit einer mittleren Partikelgröße bevorzugt unter 20 µm, besonders bevorzugt 2 bis 15 µm. Wachsdispersionen sind wässrige Zubereitungen von Wachsen, die Wasser, optional weitere, mit Wasser mischbare Lösemittel, sphärische Wachspartikel sowie in der Regel Hilfsstoffe enthalten. Bevorzugte Wachsdispersionen zum Einsatz bei der vorliegenden Erfindung weisen eine Partikelgröße unter 1 µm auf, bevorzugt 20 bis 500 nm, besonders bevorzugt 50 bis 200 nm. Mikronisierte Wachse und fertige Wachsdispersion sind kommerziell erhältlich.

Hilfsmittel werden in Wachsdispersionen beispielsweise eingesetzt, um die Dispergierbarkeit des Wachses und dessen Lagerstabilität gewährleisten. Bei den Hilfsmitteln kann es sich beispielsweise um Basen zur Neutralisation oder Teilneutralisation von Säurefunktionen im Wachs handeln, beispielsweise Alkalimetallhydroxide, Ammoniak, Amine oder Alkanolamine. Säuregruppen können auch mit Kationen, beispielsweise Ca⁺⁺ oder Zn⁺⁺ neutralisiert oder teilneutralisiert sein. Weiterhin kann es sich um grenzflächenaktive Substanzen handeln, bevorzugt um nichtionische Tenside oder anionische Tenside. Beispiele nichtionischer Tenside umfassen Ethoxylate und Propoxylate auf Basis Alkoholen und Hydroxyaromaten sowie deren Sulfatierungs- und Sulfonierungsprodukte. Beispiele anionischer Tenside umfassen Alkylsulfonate, Arylsulfonate sowie Alkylarylsulfonate.

Zur Ausführung der vorliegenden Erfindung insbesondere geeignet sind Wachsdispersionen mit einem pH kleiner 7, bevorzugt mit einem pH kleiner 6.

Erfindungsgemäß kann das Wachs in einer Menge von 0,001 bis 100 Gew. % eingesetzt werden, beispielsweise in einer Menge von 0,01 bis 70 Gew. % und insbesondere 0,1 bis 50 Gew. %, jeweils bezogen auf das auf die Gesamtmenge aller säuregruppenhaltigen Polymere X. Die Menge wird vom Fachmann beispielsweise je nach den eingesetzten Copolymeren, den sonstigen Bestandteilen der Formulierung sowie den gewünschten Eigenschaften der Schicht festgelegt.

in der Regel beträgt die eingesetzte Menge des Wachses 0,5 bis 20 Gew. %, insbesondere 1 bis 18 Gew. %. Besonders bevorzugt beträgt die Menge 1 bis 15 Gew. %, ganz besonders bevorzugt 2 bis 8 Gew. % und beispielsweise 1 bis 5 Gew. %, jeweils bezogen auf das auf die Gesamtmenge aller säuregruppenhaltigen Polymere X.

Es ist der besondere Vorteil des erfindungsgemäßen Verfahrens, dass bereits mit Zubreitungen, die nur die geschilderten Komponenten umfassen, hervorragende Resultate erzielt werden. Die Zubereitung kann über die genannten Komponenten hinaus aber optional noch weitere Komponenten umfassen.

Als weitere Komponenten sind insbesondere anorganische oder organische Säuren oder deren Mischungen zu nennen. Die Auswahl derartiger Säure ist nicht begrenzt, vorausgesetzt, es treten keine negative Effekte zusammen mit den anderen Komponenten der Formulierung auf. Der Fachmann trifft eine entsprechende Auswahl.

Beispiele geeigneter Säuren umfassen Phosphorsäure, Phosphonsäure oder organische Phosphonsäuren wie 1-Hydroxyethan-1,1-diphosphonsäure (HEDP), 2-Phosphonobutan-1,2,4-tricarbonsäure (PBTC), Aminotri(methylenphosphonsäure) (ATMP), Ethylendiamintetra(methylenphosphonsäure) (EDTMP) oder Diethylentriaminpenta(methylenphosphonsäure) (DTPMP), Sulfonsäuren wie Methansulfonsäure, Amidosulfonsäure, p-Toluolsulfonsäure, m-Nitrobenzolsulfonsäure und Derivate davon, Salpetersäure, Ameisensäure oder Essigsäure. Bevorzugt sind phosphorhaltige Säuren wie H₃PO₄, Phosphonsäure die genannten organischen Phosphonsäuren und/oder HNO₃ und besonders bevorzugt ist H₃PO₄. Ganz besonders bevorzugt enthält die Formulierung, falls überhaupt eine zusätzliche Säure vorhanden ist, ausschließlich H₃PO₄ als Säure.

Die Zubereitung kann optional weiterhin mindestens ein gelöstes Metallion oder eine gelöste Metallverbindung umfassen, beispielsweise des Al, Mg, Ca, Ni, Co, V, Fe, Zn, Zr, Mn, Mo, W, Ti, Zr handeln. Die Verbindungen können beispielsweise in Form der jeweiligen Aqua-Komplexe eingesetzt werden. Es kann sich aber auch um Komplexe mit anderen Liganden handeln, wie beispielsweise Fluorid-Komplexe von Ti(IV), Zr(IV) oder Oxometallate wie beispielsweise MoO₄²⁻ oder WO₄²⁻ oder die Verbindungen können auch in Form von Komplexe mit typischen chelatbildenden Liganden wie Ethylendiamintetraessigsäure (EDTA), Diethylentriaminpentaessigsäure (DTPA), Hydroxyethylethylendiamintriessigsäure (HEDTA), Nitrilotriessigsäure (NTA) oder Methylglycindiessigsäure (MGDA) eingesetzt werden. Weiterhin können selbstverständlich Komplexbindungen zu den Carboxylgruppen oder anderen sauren Gruppen des Polymers X vorliegen. Bevorzugt handelt es sich um Zubereitungen, welche keine Chromverbindungen enthalten. Weiterhin sollten bevorzugt keine Metallfluoride bzw. komplexen Metallfluoride anwesend sein. Die erfindungsgemäße Passivierung ist also bevorzugt eine chromfreie Passivierung, besonders bevorzugt eine chrom- und fluoridfreie Passivierung.

In einer bevorzugten Ausführungsform der Erfindung umfasst die Zubereitung mindestens ein lösliches Metallion, ausgewählt aus der Gruppe von Zn²⁺, Mg²⁺, Ca²⁺ oder Al³⁺, bevorzugt Zn²⁺, Mg²⁺ und Ca²⁺. Die lonen können als hydratisierte Metallionen vorliegen, sie können aber in Form von gelösten Verbindungen vorliegen, beispielsweise als Komplexverbindungen mit den oben erwähnten Komplexbildnern. Insbesondere können die lonen Komplexbindungen zu den sauren Gruppen des Polymers aufweisen. Bevorzugt handelt es sich um Zn²⁺ oder Mg²⁺ und ganz besonders bevorzugt um Zn²⁺. Bevorzugt umfasst die Zubereitung daneben keine weiteren Metallionen.

Die Menge der Metallionen aus der Gruppe von Zn²⁺, Mg²⁺, Ca²⁺ oder Al³⁺ wird vom Fachmann je nach den gewünschten Eigenschaften der Zubereitung bestimmt. Sie beträgt im Regelfalle 0,001 Gew. % bis 20 Gew. %, bevorzugt 0,005 bis 15 Gew. %, besonders bevorzugt 0,01 bis 12 Gew. %, und ganz besonders bevorzugt 0,03 bis 10 Gew. %, jeweils bezogen auf die Gesamtmenge aller Polymere X in der Formulierung.

Die Formulierung kann weiterhin mindestens ein gelöstes Phosphation umfassen. Sie enthält bevorzugt Phosphationen, falls auch Metallionen aus der Gruppe von Zn²⁺, Mg²⁺, Ca²⁺ oder Al³⁺ vorhanden sind. Hierbei kann es sich um alle Arten von Phosphationen handeln. Beispielsweise kann es sich um von der Orthophosphate oder um Diphosphate handeln. Für den Fachmann ist klar, dass in wässriger Lösung je nach pH-Wert und Konzentration ein Gleichgewicht zwischen den verschiedenen Dissoziationsstufen der lonen vorliegen kann.

Die Menge der Phosphationen in der Formulierung wird vom Fachmann je nach den gewünschten Eigenschaften der Formulierung festgelegt. Sie beträgt im Regelfalle 0,01 Gew. % bis 20 Gew. %, bevorzugt 0,5 bis 20 Gew. %, besonders bevorzugt 1 bis 20 Gew. % und ganz besonders bevorzugt 5 bis 20 Gew. %, jeweils gerechnet als Orthophosphorsäure und jeweils bezogen auf die Polymere X.

Die Metallionen, insbesondere die Metallionen aus der Gruppe von Zn²⁺, Mg²⁺ oder Ca²⁺ und Phosphationen können bevorzugt in Form von löslichen Salzen eingesetzt, welche beide lonen enthalten. Beispiele derartiger Verbindungen umfassen Zn₃(PO₄)₂, ZnH₂PO₄, Mg₃(PO₄)₂ oder Ca(H₂PO₄)₂ bzw. entsprechende Hydrate davon.

Die lonen können aber auch getrennt voreinander zugegeben werden. Beispielsweise können die Metallionen in Form der entsprechenden Nitrate eingesetzt werden, und die Phosphate können in Form von Phosphorsäure eingesetzt werden. Es ist auch möglich, unlösliche- oder schwerlösliche Verbindungen, wie beispielsweise die entsprechenden Carbonate, Oxide, Oxidhydrate oder Hydroxide einzusetzen, welche unter dem Einfluss von Säure gelöst werden.

Weitere optionale Komponenten der Zubereitung umfassen oberflächenaktive Verbindungen, Korrosionsinhibitoren, Komplexbildner, typische Galvanohilfsmittel oder auch weitere, von den erfindungsgemäß verwendeten Polymeren X zu unterscheidende Polymere. Weitere mögliche Additive sind übliche Lackadditive, wie sie in H. Kittel (Hrsg.) Lehrbuch der Lacke und Beschichtungen, Band 5 --Pigmente, Füllstoffe und Farbmetrik --2. Aufl. S. Hirzel-Verlag, Stuttgart 2003, beschrieben sind.

Der Fachmann trifft unter den prinzipiell möglichen optionalen Komponenten sowie hinsichtlich ihrer Mengen je nach der gewünschten Anwendung eine entsprechende Auswahl. Die Menge optionaler Komponenten sollte aber im Regelfalle nicht mehr als 20 Gew. %, bevorzugt nicht mehr als 10 Gew. % und besonders bevorzugt nicht mehr als 5 Gew. % bezogen auf die Polymere X betragen.

Die erfindungsgemäß verwendeten Zubereitungen können durch einfaches Mischen der Komponenten erhalten werden. Die Wachse werden bevorzugt zunächst separat in Wasser dispergiert und als Dispersion mit den anderen Komponenten gemischt. Derartige Wachsdispersionen sind auch kommerziell erhältlich.

Zum Passivieren metallischer Oberflächen wird die Oberfläche des Metalls mit der Zubereitung in Kontakt gebracht, beispielsweise durch Sprühen, Tauchen oder Aufwalzen.

Hinsichtlich der Verfahrenstechnik zur Durchführung der Passivierung bestehen eine Reihe von Möglichkeiten. Diese richten sich unter anderem nach der Form des Werkstückes, beispielsweise, ob noch ein unausgeformtes, flaches Metallband oder ein Metallblech oder ein Formkörper eingesetzt wird, der beispielsweise gekrümmte Flächen oder Kanten aufweist. Die Behandlung kann auch mehrere, einzelne Verfahrensschritte umfassen. Es kann sich um kontinuierliche oder um diskontinuierliche Verfahren handeln. Der Fachmann trifft unter den möglichen Verfahren eine geeignete Auswahl.

Die Behandlung kann beispielsweise durch Eintauchen in die Zubereitung oder durch Besprühen oder Bestreichen mit der Zubereitung vorgenommen werden. Auf Metallbänder und Bleche kann die Zubereitung bevorzugt aufgewalzt werden. Ein Metallband kann auch in einem kontinuierlichen Verfahren beschichtet werden. Das Metallband wird hierbei durch eine Wanne oder eine Sprühvorrichtung mit der Zubereitung gefahren. Ein kontinuierliches Verfahren zur Herstellung von Stahlbändern kann auch eine Verzinkungsstation, gefolgt von einer Vorrichtung zum Passivieren mit der Zubereitung umfassen.

Beim Aufwalzen wird in der Regel das Beschichtungsmittel mit einer Aufnahmewalze aus einem Trog aufgenommen und dann auf eine Auftragswalze übertragen. Die Auftragswalze überträgt das Beschichtungsmittel auf das Band. Aufnahmewalze und Auftragswalze können über eine dazwischenliegende Walze gekoppelt sein, über die das Beschichtungsmittel übertragen wird. Die Walzen können sich im gleichen oder entgegengesetzten Drehsinn drehen und mit oder gegen die Bandrichtung laufen. Das Beschichtungsresultat kann außerdem durch die Wahl des Anpressdrucks der Walze auf das Band und durch die Rauigkeit und Härte der Rolle bestimmt werden.

Nach einem Tauchprozess oder Sprühprozess kann man zum Entfernen überschüssiger Behandlungslösung das Werkstück abtropfen lassen; bei Blechen, Metallfolien oder dergleichen lässt sich überschüssige Behandlungslösung aber beispielsweise auch abquetschen oder abrakeln. Es ist auch möglich, die Oberfläche nach der Behandlung mit einer Reinigungsflüssigkeit, insbesondere mit Wasser, nachzuspülen, um Reste der eingesetzten Zubereitung von der Oberfläche zu entfernen.

In einer alternativen Ausführungsform kann sich bei der Behandlung auch um einen sogenannten "No-rinse" Prozess handeln, bei dem die Behandlungslösung unmittelbar nach dem Aufbringen ohne Abspülen direkt in einem Trockenofen eingetrocknet wird.

Die Behandlung mit der Zubreitung kann bei Raumtemperatur oder auch bei erhöhten Temperaturen erfolgen. Im Regelfalle erfolgt die Behandlung bei 20 bis 90°C, bevorzugt 25 bis 80°C und besonders bevorzugt 30 bis 60°C. Hierzu kann beispielsweise ein Bad mit der Zubereitung geheizt werden, eine erhöhte Temperatur kann sich aber auch automatisch einstellen, indem man warmes Metall ein Bad eintaucht.

Die Behandlungsdauer wird vom Fachmann je nach den gewünschten Eigenschaften der Schicht, der zur Behandlung eingesetzten Zusammensetzung und den technischen Rahmenbedingungen festgelegt. Sie kann deutlich weniger als eine Sekunde oder mehrere Minuten betragen. Beim kontinuierlichen Verfahren hat es sich besonders bewährt, die Oberfläche mit der Zubereitung für eine Dauer von 1 bis 60 s in Kontakt zu bringen.

Nach der Behandlung wird das eingesetzte Lösemittel, d.h. in der Regel das Wasser entfernt. Die Entfernung kann bei Raumtemperatur durch einfaches Verdampfen an Luft bei Raumtemperatur erfolgen.

Das Entfernen des Lösemittels kann aber auch durch geeignete Hilfsmittel unterstützt werden, beispielsweise durch Erwärmung und/oder durch Überleiten von Gasströmen, insbesondere Luftströmen. Das Abdampfen des Lösemittels kann beispielsweise durch IR-Strahler unterstützt werden, oder auch beispielsweise durch Trocknen in einem Trockenkanal. Bewährt hat sich zum Trocknen eine Temperatur von 30°C bis 160°C, bevorzugt 40°C bis 100°C und besonders bevorzugt 50°C bis 80°C. Gemeint ist hiermit die auf dem Metall gefundene Spitzentemperatur (Peak metal temperature (PMT)), die durch dem Fachmann geläufige Verfahren (beispielsweise berührungslose Infrarotmessung oder Bestimmung der Temperatur mit aufgeklebten Teststreifen) gemessen werden kann. Die Trocknertemperatur muss gegebenenfalls höher eingestellt werden und wird vom Fachmann entsprechend gewählt.

Das erfindungsgemäße Verfahren kann optional auch noch einen oder mehrere Vorbehandlungsschritte umfassen. Beispielsweise kann die metallische Oberfläche vor dem Passivieren mit der erfindungsgemäß eingesetzten Zubereitung gereinigt werden, z.B. um Fette oder Öle zu entfernen. Weiterhin kann sie vor dem Passivieren auch gebeizt werden, um oxidische Beläge, Zunder, einen temporären Korrosionsschutz und dergleichen zu entfernen. Weiterhin muss die Oberfläche nach und zwischen derartigen Vorbehandlungsschritten auch gegebenenfalls mit Wasser gespült werden, und die Reste von Spüllösungen oder Beizlösungen zu entfernen.

Die Passivierungsschicht kann auch noch zusätzlich vernetzt werden. Hierzu kann der Zubereitung ein Vernetzer beigemischt werden. Es kann aber auch zunächst das Metall mit der Zubereitung behandelt werden und danach die Schicht mit einem geeigneten Vernetzer behandelt werden, beispielsweise mit der Lösung eines Vernetzers besprüht werden.

Geeignete Vernetzer sollten wasserlöslich oder zumindest in dem besagten wässrigen Lösemittelgemisch löslich sein. Beispiele geeigneter Vernetzer umfassen insbesondere solche, die mindestens 2 vernetzende Gruppen, ausgewählt aus der Gruppe von Aziran-, Oxiran- oder Thiirangruppen aufweisen. Nähere Einzelheiten zu geeigneten Verhetzern und deren Anwendung sind in WO 05/042801 S.11, Zeile 34 bis Seite 14, Zeile 39 offenbart.

Mittels des erfindungsgemäßen Verfahrens ist eine Passivierungsschicht bzw. Konversionsschicht, insbesondere auf einer metallischen Oberfläche aus Zn, Zn-Legierungen, Al oder Al-Legierungen erhältlich. Im Zuge der Behandlung der Oberfläche löst sich ein Teil des zu schützenden Metalls auf, und wird gleich darauf wieder in einen oxidischen Film auf der Metalloberfläche eingebaut. Durch die Verwendung der Copolymere X mit einem hohen Gehalt an sauren Gruppen und einem niedrigen Neutralisationsgrad verläuft oberflächliche Lösen besonders gut, und es wird ein ausgezeichneter Korrosionsschutz erhalten. Die genaue Struktur und Zusammensetzung der Passivierungsschicht ist uns nicht bekannt. Sie umfasst aber neben den üblichen amorphen Oxiden des Aluminiums oder Zinks sowie ggf. weiterer Metalle auch die Reaktionsprodukte des Polymers sowie gegebenenfalls des Vernetzers und/oder weiterer Komponenten der Formulierung. Die Zusammensetzung der Passivierungsschicht ist im Allgemeinen nicht homogen, sondern die Komponenten scheinen Konzentrationsgradienten aufzuweisen.

Die Dicke der Passivierungsschicht wird vom Fachmann je nach den gewünschten Eigenschaften der Schicht eingestellt. Im Regelfalle beträgt die Dicke 0,01 bis 3 µm, bevorzugt 0,1 bis 2,5 µm, und besonders bevorzugt 0,5 bis 2 µm.

Die Dicke lässt sich beispielsweise über die Art und Menge der aufgetragenen Komponenten sowie die Einwirkzeit beeinflussen. Weiterhin lässt sie sich durch verfahrenstechnische Parameter beeinflussen, beispielsweise durch Abrakeln oder Abwalzen zu viel aufgebrachter Behandlungslösung.

Die Dicke der Schicht wird dabei durch Differenzwägung vor und nach Einwirkung der erfindungsgemäß eingesetzten Zusammensetzung auf die Metalloberfläche unter der Annahme, dass die Schicht eine spezifische Dichte von 1 kg/l aufweist, ermittelt. Im Folgenden wird unter "Schichtdicke" immer eine derartig ermittelte Größe verstanden, unabhängig davon, welche spezifische Dichte die Schicht tatsächlich aufweist. Diese dünnen Schichten genügen, um einen hervorragenden Korrosionsschutz zu erzielen. Durch solche dünnen Schichten ist die Maßhaltigkeit der passivierten Werkstücke gewährleistet.

Ein weiterer Gegenstand der vorliegenden Anmeldung ist eine metallische Oberfläche, welche die erfindungsgemäße Passivierungsschicht umfasst. Die Passivierungsschicht ist unmittelbar auf der eigentlichen Metalloberfläche aufgebracht. In einer bevorzugten Ausführungsform handelt es sich um ein Bandmetall aus Stahl, welches eine Beschichtung aus Zn oder einer Zn-Legierung umfasst, und auf der eine erfindungsgemäße Passivierungsschicht aufgebracht ist. Es kann sich weiterhin um eine Automobilkarosserie handeln, welche mit der erfindungsgemäßen Passivierungsschicht überzogen ist. Die metallische Oberfläche mit Passivierungsschicht kann in prinzipiell bekannter Art und Weise mit einer oder mehreren farb- oder effektgebende Lackschichten überlackiert werden. Typische Lacke, deren Zusammensetzung sowie typische wie Schichtfolgen bei mehreren Lackschichten sind dem Fachmann prinzipiell bekannt. Dabei zeigt sich, dass die erfindungsgemäße Passivierung die Lackhaftung verbessert und einen Unterwanderungsschutz erzeugt.

Die erfindungsgemäße Passivierung kann auf verschiedenen Verarbeitungsstufen eingesetzt werden. Sie kann beispielsweise bei einem Stahlhersteller vorgenommen werden. Hierbei kann ein Stahlband in einem kontinuierlichen Verfahren verzinkt und unmittelbar nach der Verzinkung durch Behandeln mit der erfindungsgemäß verwendeten Formulierung passiviert werden. Eine Passivierung in diesem Stadium wird vom Fachmann häufig auch als "Nachbehandlung" bezeichnet.

Hierbei kann es sich nur um eine temporäre Passivierung handeln, die zum Korrosionsschutz bei der Lagerung und beim Transport und/oder bei weiteren Verfahrensschritten dient, aber vor dem Aufbringen des permanenten Korrosionsschutzes wieder entfernt wird. Die saueren Copolymere lassen sich durch eine Reinigung mit wässrigen alkalischen Lösungen wieder von der Oberfläche entfernen.

Es kann sich aber auch um eine permanente Korrosionsschutzbehandlung handeln, die auf dem Band oder dem fertig ausgeformten Werkstück verbleibt und mit zusätzlichen Lackschichten versehen wird. Eine Passivierung in diesem Stadium wird vom Fachmann häufig auch als "Vorbehandlung" bezeichnet.

Der Zusatz von Wachsen beim erfindungsgemäße Verfahren zum Passivieren macht sich bei der Weiterverarbeitung der metallischen Materialien vorteilhaft bemerkbar, insbesondere bei der Weiterverarbeitung von Blechen und/oder Bändern, welche mittels des erfindungsgemäßen Verfahrens passiviert wurden.

Zur Herstellung von Werkstücken ausgehend von Blechen, Bändern oder anderen metallischen Halbzeugen ist im Regelfalle mindestens ein Trennschritt und ein Umformschritt erforderlich. Größere Bauteile können danach aus Einzelteilen zusammengefügt werden. Beim Umformen wird die Form des Materials in der Regel in Kontakt mit einem Werkzeug verändert. Es kann sich beispielsweise um Druckumformen, wie Walzen oder Prägen handeln, um Zugdruckumformen, wie Durchziehen, Tiefziehen, Kragenziehen oder Drücken, Zugumformen wie Längen oder Weiten, Biegeumformen wie Biegen, Rundwalzen oder Abkanten sowie Schubumformen wie Verdrehen oder Verschieben handeln.

Durch den Zusatz von Wachsen kann die Reibung der Oberfläche des Metalls mit der Oberfläche der zum Umformen eingesetzten Werkzeuge vorteilhaft herabgesetzt werden. Hierdurch wird eine schonendere Verarbeitung erreicht und vorteilhaft eine Verletzung oder Beschädigung der passivierten Oberfläche vermieden.

Die folgenden Beispiele sollen die Erfindung näher illustrieren:

### Eingesetzte Materialien

### Copolymer X

Säuregruppenhaltiges Copolymer aus 60 Gew. % Acrylsäure, 20 Gew. % Maleinsäure und 20 Gew. % Vinylphosphonsäure. Die Menge der Säuregruppen beträgt 1,37 mol / 100 g des Polymers. Der Neutralisationsgrad der Säuregruppen beträgt ca. 6 mol % (neutralisiert mit Triethanolamin), M_{w} ca. 25000 g/mol.

### Wachse

Wachs I ist ein Montanesterwachs mit einem Schmelzpunkt von ca. 78°C. Säurezahl des Wachses 25 - 35 mg KOH/g, Mₙ ca. 1000 g/mol. Eingesetzt wird eine wässrige, nicht ionogene Emulsion des Wachses mit einem Feststoffgehalt von ca. 40%.

Wachs II ist ein Niederdruckpolyethylenwachs mit einem Schmelzpunkt von ca. 126-133 °C. Säurezahl des Wachses 17,5 - 19 mg KOH/g, M_{w} ca. 12000 g/mol. Eingesetzt wird eine wässrige Emulsion mit einem Feststoffgehalt von ca. 35%.

Wachs III ist ein oxidiertes Polyethylenwachs mit einem Schmelzpunkt von ca. 125°C. Säurezahl des Wachses 20 - 24 mg KOH/g, M_{w} ca. 11000 g/mol. Eingesetzt wird eine wässrige Emulsion mit einem Feststoffgehalt von ca. 30%.

### Eingesetzte Formulierungen:

### Formulierung 1:

Lösung des Copolymers (ca. 25 %) in Wasser;
Optional wurden zusätzlich die in Tabelle 1 angegebenen Mengen an Wachs zugesetzt.
Optional wurde zusätzlich Wasser zugegeben, so dass sich jeweils eine Konzentration von 20 % Copolymer bezüglich aller Komponenten der Formulierung ergab.
pH-Wert der Formulierung < 3

### Formulierung 2:

Lösung des Copolymers (ca. 25 %) in Wasser;
4,53 Gew. % Mg₃(PO₄)₂ bzgl. Copolymer X (⇒ 1,26 Gew. % Mg²⁺ bzgl. Copolymer X) 3,39 Gew. % H₃PO₄ bzgl. Copolymer X
(=> Gesamtphosphat: 6,76 Gew. % bzgl. Copolymer X)
Optional wurden zusätzlich die in Tabelle 1 angegebenen Mengen an Wachs zugesetzt.

Optional wurde zusätzlich Wasser zugegeben, so dass sich jeweils eine Konzentration von 18 % Copolymer bezüglich aller Komponenten der Formulierung ergab.
pH-Wert der Formulierung < 3

Die wachshaltigen Formulierungen bilden zum Teil nach einigen Tagen ohne mechanische Bewegung ein 2-Phasen-Gemisch, das sich aber ohne großen Aufwand wieder durch einfaches Aufschütteln homogenisieren lässt.

### Stahlbleche, Reinigung

Für die Beispiele und Vergleichsbeispiele wurden Prüfbleche aus heißverzinktem Stahl 1.0037 (Gardobond^{®} HDG-OE) eingesetzt.

Die Bleche wurden in eine alkalischen Reinigungslösung (Ridoline^{Ⓡ} C72, Fa. Henkel) für 10-20 Sekunden getaucht, sofort mit vollentsalztem Wasser abgespült und anschließend mit Stickstoff getrocknet.

### Beschichten

Die Bleche wurden jeweils für 3 sec in die jeweiligen Formulierungen eingetaucht, sofort abgewalzt und 12 sec bei 160°C getrocknet.

### Schichtdicke

Die Dicke der Passivierungsschicht wurde durch Differenzwägung vor und nach Einwirken der erfindungsgemäß eingesetzten Zusammensetzung auf die Metalloberfläche und unter der Annahme, dass die Schicht eine spezifische Dichte von 1 kg/l aufweist, ermittelt. Im Folgenden wird unter "Schichtdicke" immer eine derartig ermittelte Größe verstanden, unabhängig davon, welche spezifische Dichte die Schicht tatsächlich aufweist.

### Korrosionstests

### Salzsprühtest

Die korrosionsinhibierende Wirkung wurde mittels eines Salzsprühtests nach DIN 50021 ermittelt. Diese Sprühnebelprüfung ist eine in DIN 50021 genormte Korrosionsprüfung, bei der man fein versprühte Natriumchlorid-Lösung auf die Probe einwirken lässt. Auf eine geneigte Probe werden bei 35 °C bezogen auf 80 cm² Fläche 1,5 ml/h der Lösung mit Hilfe befeuchteter Pressluft gesprüht. Als Lösung wurde eine 5 %ige NaCl-Lösung verwendet. Die beschichteten Proben werden unversehrt dem Test unterworfen.

Schädigungen treten an Schwachstellen auf und werden anhand des flächigen Weißrostauftretens in Flächenrostindizes von R10 (keine Rosterscheinungen) bis R0 (komplette Rostbedeckung, siehe nachfolgende Tabelle).

| Fehlerfläche % | Bewertungsgrad R_{β} oder R_{A} | Fehlerfläche % | Bewertungsgrad R_{β} oder R_{A} |
|---|---|---|---|
| kein Fehler | 10 | 2,5 < A ≤ 5,0 | 5 |
| 0 < A ≤ 0,25 | 9 | 5,0 < A ≤ 10 | 4 |
| 0,25 < A ≤ 0,5 | 8 | 10 < A ≤ 25 | 3 |
| 0,5 < A ≤ 1,0 | 7 | 25 < A ≤ 50 | 2 |
| 1,0 < A ≤ 2,5 | 6 | 50 < A ≤ 75 | 1 |
| 2,5 < A ≤ 5,0 | 5 | 75 < A | 0 |

Je größer der Rostindex umso besser.

### Kondenswasser-Wechselklima-Test:

Der Kondenswasser-Wechselklima-Test (DIN 50017) besteht einem oder mehreren Klimazyklen mit jeweils zwei Prüfabschnitten. Im ersten Abschnitt werden die Prüfkörper 8 Stunden bei einer Temperatur von 40 °C und einer relativen Luftfeuchtigkeit von 100%, im zweiten Abschnitt bei einer Temperatur von 18-28 °C bei einer Luftfeuchtigkeit von unter 100% (Umgebungsbedingung), belastet. Die Dauer eines Zyklus beträgt somit 24 Stunden. Es wurden insgesamt 3 Zyklen durchgeführt.

### Mechanische Tests:

### Kugeltiefung (Erichsen)

Mittels der Erichsen-Tests (DIN 53156) wird die Dehnbarkeit einer Beschichtung auf einem Blech beim langsamen Verformen des Bleches bestimmt. Hierzu wird das beschichtete Blech durch langsames Eindrücken einer Kugel (Durchmesser: 20 mm) von der Blechrückseite verformt. Die Bleche wurden jeweils bis zu einer Eindrücktiefe von 6,5 mm und 9,5 mm verformt und anschließend die Güte der Beschichtung an der Eindrückstelle visuell begutachtet.

Die Beschichtungen wurden mittels der folgenden Noten beurteilt:
- 0: Beschichtung gerissen
- 1: Beschichtung angerissen
- 2: Beschichtung fast o.k. (ganz leichte Ansätze von Rissen erkennbar)
- 3: Beschichtung o.k. ohne Risse

### Oberflächenreibung:

Die Oberflächenreibung wurde bestimmt, indem ein beweglicher Schlitten mit einer Masse von 1 kg auf 3 Auflagepunkten (7 mm, Edelstahlkugel) bei konstanter Geschwindigkeit von ca. 0,1m/s über das Blech (50 cm*10 cm) gleitet. Es wurde jeweils die Kraft zum horizontalen Bewegen der auf dem Blech aufliegenden Masse mittels einer Federwaage bestimmt. Messwerte wurden als Mittelwert aus 10 Messungen angegeben. Die Kräfte sind in mN angegeben.

Alle Ergebnisse sind jeweils in Tabelle 1 zusammengestellt.

**Tabelle 1: Zusammenstellung der eingesetzten Formulierungen sowie der Messergebnisse Anmerkungen:**

| Beispiel Nr. | V 1 | V 2 | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|---|
| Eingesetzte Formulierung | 1 | 2 | 1 | 2 | 1 | 2 | 1 | 2 | 1 | 2 | 1 | 2 | 1 | 2 | 1 | 2 |
| Wachs I [Gew. %]¹ | - | - | 0,5 | 0,56 | 5 | 5,6 | - | - | - | - | - | - | - | - | - | - |
| Wachs II [Gew. %]¹ | - | - | - | - | - | - | 0,5 | 0,56 | 5 | 5,6 | - | - | - | - | - | - |
| Wachs III [Gew. %]¹ | - | - | - | - | - | - | - | - | - | - | 0,5 | 0,56 | 5 | 5,6 | 25 | 27,8 |
| Schichtdicke[µm] | <2 | <2 | <2 | <2 | <2 | <2 | <2 | <2 | <2 | <2 | <2 | <2 | <2 | <2 | <2 | <2 |
| Oberflächenreibung [in mN] | 7540 | 7370 | 3830 | 3650 | 1040 | 940 | 4500 | 3950 | 1560 | 1700 | 6890 | 5750 | 1300 | 1530 | 900 | 960 |
| Salzsprühtest, nach 48h | R7 | R10 | R7 | R8 | R7 | R9 | R6 | R7 | R8 | R8 | R6 | R9 | R8 | R9 | R3 | R4 |
| Klimawechseltest nach 72h | R10 | R 10 | R10 | R10 | R10 | R10 | R10 | R10 | R10 | R10 | R10 | R10 | R10 | R10 | R5 | R5 |
| Erichsentiefung [6,5 mm] | 3 | 3 | 3 | 3 | 3 | 3 | 3 | 3 | 3 | 3 | 3 | 3 | 3 | 3 | 3 | 3 |
| Erichsentiefung [9,5 mm] | 0 | 1 | 2 | 1 | 2 | 1 | 0 | 1 | 3 | 3 | 2 | 0 | 3 | 3 | 3 | 3 |

| | | | | | | | | | | | | | | | | |
|---|---|---|---|---|---|---|---|---|---|---|---|---|---|---|---|---|
| ¹Gew. % bezogen auf Copolymer X; V = Vergleichsbeispiel | | | | | | | | | | | | | | | | |

Die Beispiele und Vergleichsbeispiele zeigen, dass die mechanischen Eigenschaften der Beschichtung durch den Zusatz von Wachsen deutlich verbessert werden.

Die Oberflächenreibung nimmt bereits beim Zusatz geringer Mengen von Wachsen signifikant ab. Hierdurch wird die mechanische Ver- und Bearbeitung der Bleche erleichtert. Je größer die Wachsmenge, desto geringer die Oberflächenreibung. Allerdings nimmt bei großen Mengen ab ca. 25 Gew. % Wachs die Korrosionsschutzwirkung der Oberflächenbeschichtung wieder ab.

Mit 0,5 bis 0,6 Gew. % Wachs bezüglich des Polymers werden im Erichsen-Test bereits leichte Verbesserungen gegenüber Versuchen ohne Wachs erzielt, mit 5 bis 6 Gew. % deutliche Verbesserungen.

Polyethylenwachs und oxidiertes Polyethylenwachs ergeben jeweils bessere Ergebnisse als Montanesterwachs.

## Patentansprüche

1. Verfahren zum Passivieren von metallischen Oberflächen durch Behandlung der Oberfläche mit einer sauren, wässrigen Zubereitung umfassend mindestens ein wasserlösliches, saure Gruppen umfassendes Polymer X, **dadurch gekennzeichnet, dass**
• das Polymer mindestens 0,9 mol Säuregruppen /100 g des Polymers aufweist und es sich hierbei um ein Copolymer X1 handelt, welches aus den folgenden monomeren Einheiten jeweils bezogen auf die Menge aller in das Copolymer einpolymerisierten Monomere aufgebaut ist:
(A) 40 bis 90 Gew. % (Meth)acrylsäure,
(B) 5 bis 60 Gew. % mindestens eines weiteren, von (A) verschiedenen- monoethylenisch ungesättigten Monomers, welches eine oder mehrere saure Gruppen aufweist, ausgewählt aus der Gruppe von
(B1) monoethylenisch ungesättigten Dicarbonsäuren mit 4 bis 7 Kohlenstoffatomen, und/oder
(B2) monoethylenisch ungesättigten Phosphor- und/oder Phosphonsäuren,
(C) optional 0 bis 30 Gew. % mindestens eines weiteren -von (A) und (B) verschiedenen- ethylenisch ungesättigten Monomers,
• der pH-Wert der Zubereitung nicht mehr als 5 beträgt,
• die Menge des Polymers 1 bis 40 Gew. % bezogen auf die Menge aller Komponenten der Zubereitung beträgt,
• die Zubereitung weiterhin mindestens ein Wachs umfasst, und
• die Menge des Wachses 0,001 bis 100 Gew. %, bezogen auf die Gesamtmenge aller Polymere X beträgt.

2. Verfahren gemäß Anspruch 1, **dadurch gekennzeichnet, dass** es sich bei Monomer (B1) um mindestens eines ausgewählt aus der Gruppe von Maleinsäure, Fumarsäure und Itaconsäure handelt.

3. Verfahren gemäß Anspruch 1, **dadurch gekennzeichnet, dass** es sich bei Monomer (B2) um mindestens eines ausgewählt aus der Gruppe von Vinylphosphonsäure, Phosphorsäurevinylester oder Allylphosphonsäure handelt.

4. Verfahren gemäß einem der Ansprüche 1 bis 3, **dadurch gekennzeichnet, dass** das Copolymer mindestens ein Monomer (B1) und mindestens ein Monomer (B2) umfasst.

5. Verfahren gemäß Anspruch 4, **dadurch gekennzeichnet, dass** die Menge von Monomeren (A) 50 bis 90 Gew. %, die Menge von (B1) 5 bis 45 Gew. %, die Menge (B2) 5 bis 45 Gew. % und die Menge von (C) 0 bis 20 Gew. % beträgt.

6. Verfahren gemäß Anspruch 4, **dadurch gekennzeichnet, dass** die Menge von Monomeren (A) 50 bis 80 Gew. %, die Menge von (B1) 12 bis 42 Gew. %, die Menge (B2) 8 bis 38 Gew. % und die Menge von (C) 0 bis 10 Gew. % beträgt.

7. Verfahren gemäß einem der Ansprüche 1 bis 6, **dadurch gekennzeichnet, dass** es sich bei (B1) um Maleinsäure und bei (B2) um Vinylphosphonsäure handelt.

8. Verfahren gemäß einem der Ansprüche 1 bis 7, **dadurch gekennzeichnet, dass** die Menge des Wachses 0,5 bis 20 Gew. %, bezogen auf die Gesamtmenge aller Polymere X bezieht.

9. Verfahren gemäß einem der Ansprüche 1 bis 7, **dadurch gekennzeichnet, dass** die Menge des Wachses 1 bis 18 Gew. %, bezogen auf die Gesamtmenge aller Polymere X bezieht.

10. Verfahren gemäß einem der Ansprüche 1 bis 9, **dadurch gekennzeichnet, dass** es sich bei dem Wachs oligo- oder polymere Substanzen handelt, die ein Molekulargewicht Mₙ größer 200 g/mol aufweisen und die einen Gewichtsanteil von mehr als 60 Gew. % an Strukturelementen ausgewählt aus der Gruppe von
• (-CH₂-CH₂-)
• (-CH₂-CH<)
• (-CH₂-CH(CH₃)-)
• (-CH₃)
• (-CR₂-CR₂-) und (-CR₂-CR(CR₃)-)
aufweisen, wobei R für H und/oder F steht, und mit der Maßgabe, dass die genannten Strukturelemente so miteinander verbunden sind, dass sie überwiegend Einheiten von wenigstens 12 direkt miteinander verknüpften Kohlenstoffatomen umfassen.

11. Verfahren gemäß einem der Ansprüche 1 bis 9, **dadurch gekennzeichnet, dass** es sich bei dem Wachs um mindestens eines ausgewählt aus der Gruppe von Polyethylenwachsen, Ethylen-(Meth)acrylsäure-Wachsen oder oxidierten Polyethylenwachsen handelt.

12. Verfahren gemäß einem der Ansprüche 1 bis 11, **dadurch gekennzeichnet, dass** die Formulierung weiterhin mindestens ein Metallion ausgewählt aus der Gruppe von Zn²⁺, Ca²⁺, Mg²⁺ und Al³⁺ umfasst.

13. Verfahren gemäß einem der Ansprüche 1 bis 12, **dadurch gekennzeichnet, dass** es sich um eine metallische Oberfläche aus Zn, Al, Mg, Sn, Fe, Ni oder deren Legierungen.

14. Verfahren gemäß einem der Ansprüche 1 bis 13, **dadurch gekennzeichnet, dass** es sich bei der Metalloberfläche um die Oberfläche eines Bandmetalls handelt.

15. Verfahren gemäß Anspruch 14, **dadurch gekennzeichnet, dass** es sich bei dem Bandmetall um elektrolytisch verzinkten oder heißverzinkten Stahl handelt.

16. Verfahren gemäß einem der Ansprüche 1 bis 15, **dadurch gekennzeichnet, dass** es sich um ein chromfreies Verfahren handelt.

17. Verfahren gemäß einem der Ansprüche 14 bis 16, **dadurch gekennzeichnet, dass** man die Behandlung mittels eines kontinuierlichen Verfahrens vornimmt.

18. Passivierungsschicht auf einer metallischen Oberfläche erhältlich durch ein Verfahren gemäß einem der Ansprüche 1 bis 17.

19. Passivierungsschicht gemäß Anspruch 14, **dadurch gekennzeichnet, dass** deren Dicke 0,01 bis 3 µm beträgt.

## Claims

1. A process for the passivation of metallic surfaces by treatment of the surface with an acidic, aqueous preparation comprising at least one water-soluble polymer X comprising acidic groups, wherein
• the polymer has at least 0.9 mol of acid groups/100 g of the polymer, and the water-soluble polymer X is a copolymer X1 which is composed of the following monomeric units, based in each case on the amount of all monomers incorporated as polymerized units in the copolymer:
(A) from 40 to 90% by weight of (meth)acrylic acid,
(B) from 5 to 60% by weight of at least one further monoethylenically unsaturated monomer which differs from (A) and has one or more acidic groups, selected from the group consisting of
(B1) monoethylenically unsaturated dicarboxylic acids having 4 to 7 carbon atoms and/or
(B2) monoethylenically unsaturated phosphoric and/or phosphonic acids,
(C) optionally from 0 to 30% by weight of at least one further ethylenically unsaturated monomer differing from (A) and (B),
• the pH of the preparation is not more than 5,
• the amount of the polymer is from 1 to 40% by weight, based on the amount of all components of the preparation,
• the preparation furthermore comprises at least one wax, and
• the amount of wax is from 0.001 to 100% by weight, based on the total amount of all polymers X.

2. The process according to claim 1, wherein monomer (B1) is at least one selected from the group consisting of maleic acid, fumaric acid and itaconic acid.

3. The process according to claim 1, wherein monomer (B2) is at least one selected from the group consisting of vinylphosphonic acid, vinyl phosphate or allylphosphonic acid.

4. The process according to any of claims 1 to 3, wherein the copolymer comprises at least one monomer (B1) and at least one monomer (B2).

5. The process according to claim 4, wherein the amount of monomers (A) is from 50 to 90% by weight, the amount of (B1) is from 5 to 45% by weight, the amount of (B2) is from 5 to 45% by weight and the amount of (C) is from 0 to 20% by weight.

6. The process according to claim 4, wherein the amount of monomers (A) is from 50 to 80% by weight, the amount of (B1) is from 12 to 42% by weight, the amount of (B2) is from 8 to 38% by weight and the amount of (C) is from 0 to 10% by weight.

7. The process according to any of claims 1 to 6, wherein (B1) is maleic acid and (B2) is vinylphosphonic acid.

8. The process according to any of claims 1 to 7, wherein the amount of wax is from 0.5 to 20% by weight, based on the total amount of all polymers X.

9. The process according to any of claims 1 to 7, wherein the amount of wax is from 1 to 18% by weight, based on the total amount of all polymers X.

10. The process according to any of claims 1 to 9, wherein the wax comprises oligomeric or polymeric substances which have a molecular weight Mₙ greater than 200 g/mol and which have a proportion by weight of more than 60% by weight of structural elements selected from the group consisting of
• (-CH₂-CH₂-)
• (-CH₂-CH<)
• (-CH₂-CH(CH₃)-)
• (-CH₃)
• (-CR₂-CR₂-) and (-CR₂-CR(CR₃)-)
R being H and/or F, and with the proviso that said structural elements are linked to one another so that they predominantly comprise units of at least 12 carbon atoms linked directly to one another.

11. The process according to any of claims 1 to 9, wherein the wax is at least one selected from the group consisting of polyethylene waxes, ethylene-(meth)acrylic acid waxes or oxidized polyethylene waxes.

12. The process according to any of claims 1 to 11, wherein the formulation furthermore comprises at least one metal ion selected from the group consisting of Zn²⁺, Ca²⁺, Mg²⁺ and Al³⁺.

13. The process according to any of claims 1 to 12, wherein the metallic surface is one comprising Zn, Al, Mg, Sn, Fe, Ni or alloys thereof.

14. The process according to any of claims 1 to 13, wherein the metal surface is the surface of a strip metal.

15. The process according to claim 14, wherein the strip metal is electrogalvanized or hot-galvanized steel.

16. The process according to any of claims 1 to 15, which is a chromium-free process.

17. The process according to any of claims 14 to 16, wherein the treatment is carried out by means of a continuous process.

18. A passivation layer on a metallic surface obtainable by a process according to any of claims 1 to 17.

19. The passivation layer according to claim 14, wherein the thickness thereof is from 0.01 to 3 µm.

## Revendications

1. Procédé de passivation de surfaces métalliques par traitement des surfaces au moyen d'une préparation aqueuse acide comprenant au moins un polymère X soluble dans l'eau contenant des groupes acides, **caractérisé en ce que** :
- le polymère présente au moins 0,9 mol de groupes acides/100 g du polymère, et
le polymère X soluble dans l'eau est un copolymère X1, qui est constitué des unités monomères suivantes, à chaque fois par rapport à la quantité de tous les monomères copolymérisés dans le copolymère :
(A) de 40 à 90% en poids d'acide (méth)acrylique,
(B) de 5 à 60% en poids d'au moins un autre monomère monoéthyléniquement insaturé, différent de (A), qui présente un ou plusieurs groupes acides,
choisis dans le groupe formé par :
(B1) des acides dicarboxyliques monoéthyléniquement insaturés comportant de 4 à 7 atomes de carbone, et/ou
(B2) des acides phosphoriques et/ou phosphoniques monoéthyléniquement insaturés,
(C) facultativement, de 0 à 30% en poids d'au moins un autre monomère éthyléniquement insaturé, différent de (A) et (B),
- le pH de la préparation n'excède pas 5,
- la quantité du polymère est de 1 à 40% en poids, par rapport à la quantité de tous les composants de la préparation,
- la préparation comprend en outre au moins une cire, et
- la quantité de la cire est de 0,001 à 100% en poids, par rapport à la quantité totale de tous les polymères X.

2. Procédé selon la revendication 1, **caractérisé en ce que** le monomère (B1) consiste en au moins un monomère choisi dans l'ensemble constitué par l'acide maléique, l'acide fumarique et l'acide itaconique.

3. Procédé selon la revendication 1, **caractérisé en ce que** le monomère (B2) consiste en au moins un monomère choisi dans l'ensemble constitué par l'acide vinylphosphonique, le phosphate de vinyle et l'acide allylphosphonique.

4. Procédé suivant l'une quelconque des revendications 1 à 3, **caractérisé en ce que** le copolymère comprend au moins un monomère (B1) et au moins un monomère (B2).

5. Procédé suivant la revendication 4, **caractérisé en ce que** la quantité de monomères (A) est de 50 à 90% en poids, la quantité de (B1) est de 5 à 45% en poids, la quantité de (B2) est de 5 à 45% en poids, et la quantité de (C) est de 0 à 20% en poids.

6. Procédé suivant la revendication 4, **caractérisé en ce que** la quantité de monomères (A) est de 50 à 80% en poids, la quantité de (B1) est de 12 à 42% en poids, la quantité de (B2) est de 8 à 38% en poids, et la quantité de (C) est de 0 à 10% en poids.

7. Procédé suivant l'une quelconque des revendications 1 à 6, **caractérisé en ce que** (B1) est de l'acide maléique et (B2) est de l'acide vinylphosphonique.

8. Procédé selon l'une quelconque des revendications 1 à 7, **caractérisé en ce que** la quantité de la cire va de 0,5 à 20 % en poids, par rapport à la quantité totale de tous les polymères X.

9. Procédé selon l'une quelconque des revendications 1 à 7, **caractérisé en ce que** la quantité de la cire va de 1 à 18 % en poids, par rapport à la quantité totale de tous les polymères X.

10. Procédé selon l'une quelconque des revendications 1 à 9, **caractérisé en ce que** la cire consiste en des substances oligomères ou polymères qui présentent une masse moléculaire Mₙ supérieure à 200 g/mole et qui présentent une teneur pondérale de plus de 60 % en poids en éléments structuraux choisis dans l'ensemble constitué par
• (-CH₂-CH₂-)
• (-CH₂-CH<)
• (-CH₂-CH(CH₃)-)
• (-CH₃)
• (-CR₂-CR₂-) et (-CR₂-CR(CR₃)-)
R représentant H et/ou F, et étant entendu que les éléments structuraux nommés sont liés les uns aux autres de manière à comprendre essentiellement des motifs d'au moins 12 atomes de carbone liés entre eux.

11. Procédé selon l'une quelconque des revendications 1 à 9, **caractérisé en ce que** la cire consiste en au moins une cire choisie dans l'ensemble constitué par les cires de polyéthylène, les cires éthylène-acide (méth)acrylique et les cires de polyéthylène oxydées.

12. Procédé suivant l'une quelconque des revendications 1 à 11, **caractérisé en ce que** la formulation comprend en outre au moins un ion métallique choisi dans le groupe formé par Zn²⁺, Ca²⁺, Mg²⁺ et Al³⁺.

13. Procédé suivant l'une quelconque des revendications 1 à 12, **caractérisé en ce qu'**il s'agit d'une surface métallique de Zn, Al, Mg, Sn, Fe, Ni ou de leurs alliages.

14. Procédé suivant l'une quelconque des revendications 1 à 13, **caractérisé en ce que** la surface métallique est la surface d'un métal en bande.

15. Procédé suivant la revendication 14, **caractérisé en ce que** le métal en bande est de l'acier électrogalvanisé ou galvanisé à chaud.

16. Procédé suivant l'une quelconque des revendications 1 à 15, **caractérisé en ce qu'**il s'agit d'un procédé sans chrome.

17. Procédé suivant l'une quelconque des revendications 14 à 16, **caractérisé en ce que** l'on entreprend le traitement au moyen d'un procédé continu.

18. Couche de passivation sur une surface métallique, que l'on peut obtenir par un procédé suivant l'une quelconque des revendications 1 à 17.

19. Couche de passivation suivant la revendication 14, **caractérisée en ce que** son épaisseur est de 0,01 à 3 µm.
